(19) **Europäisches Patentamt European Patent Office Office européen des brevets**

(11) **EP 4 366 954 B1**

(12) **FASCICULE DE BREVET EUROPEEN**

(45) Date de publication et mention de la délivrance du brevet:
**27.08.2025 Bulletin 2025/35**

(21) Numéro de dépôt: **22748034.0**

(22) Date de dépôt: **11.07.2022**

(51) Classification Internationale des Brevets (IPC):
**B42D 25/324** *(2014.01)* **B42D 25/328** *(2014.01)*
**G02B 3/00** *(2006.01)* **G02B 3/08** *(2006.01)*
**G02B 5/18** *(2006.01)*

(52) Classification Coopérative des Brevets (CPC):
**B42D 25/324; B42D 25/328; G02B 5/1814; G02B 5/1861**

(86) Numéro de dépôt international:
**PCT/EP2022/069357**

(87) Numéro de publication internationale:
**WO 2023/281123 (12.01.2023 Gazette 2023/02)**

(54) **COMPOSANTS OPTIQUES DE SÉCURITÉ, FABRICATION DE TELS COMPOSANTS ET DOCUMENTS SÉCURISÉS ÉQUIPÉS DE TELS COMPOSANTS**

OPTISCHE SICHERHEITSKOMPONENTEN, HERSTELLUNG SOLCHER KOMPONENTEN UND MIT SOLCHEN KOMPONENTEN AUSGESTATTETE SICHERHEITSDOKUMENTE

OPTICAL SECURITY COMPONENTS, MANUFACTURE OF SUCH COMPONENTS AND SECURE DOCUMENTS EQUIPPED WITH SUCH COMPONENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2021 FR 2107518**

(43) Date de publication de la demande:
**15.05.2024 Bulletin 2024/20**

(73) Titulaire: **SURYS**
**77600 Bussy-Saint-Georges (FR)**

(72) Inventeur: **GANANATHAN, Nelson**
**93300 Aubervilliers (FR)**

(74) Mandataire: **Osha BWB**
**2, rue de la Paix**
**75002 Paris (FR)**

(56) Documents cités:
**EP-A2- 3 598 204**

**Description**

**Domaine technique de l'invention**

La présente description concerne le domaine du marquage de sécurité. Plus particulièrement, elle se rapporte à des composants optiques de sécurité pour vérifier l'authenticité d'un document en réflexion, à l'œil nu ou avec un dispositif optique de contrôle, à un procédé de fabrication d'un tel composant et à un document sécurisé équipé d'un tel composant.

**État de la technique**

On connaît de nombreuses technologies pour l'authentification de documents ou de produits, et notamment pour la sécurisation de documents tels que des documents de valeur, des documents de type billets de banque, passeports ou autres documents d'identification. Ces technologies visent à la production de composants optiques de sécurité dont les effets optiques en fonction des paramètres d'observation (orientation du composant par rapport à l'axe d'observation, position et dimensions de la source lumineuse, etc.) prennent des configurations très caractéristiques et vérifiables. Le but général de ces composants optiques est de fournir des effets optiques nouveaux et différenciés, à partir de configurations physiques difficilement reproductibles. Parmi ces composants, on appelle DOVID pour *"Diffractive Optical Variable Image Device",* les composants optiques produisant des images diffractives et variables que l'on appelle communément les hologrammes.

Il est connu par exemple de générer un effet consistant en une variation dynamique d'un effet optique, par exemple sous forme de déplacement dans une direction donnée d'une zone lumineuse et/ou colorée, parfois appelée « *barre déroulante* » ou « *rolling bar* » selon l'expression anglo-saxonne, le déplacement résultant d'une rotation (tilt) du composant. Un observateur peut alors observer une zone lumineuse et/ou colorée qui se déplace le long d'une image lorsqu'il fait tourner le composant, ce qui constitue un contrôle d'authentification supplémentaire.

De tels effets optiques dynamiques présentant des « *barres déroulantes* » sont par exemple décrits dans la demande de brevet publiée WO2015154943 [Réf. 1] au nom de la déposante. Un composant optique de sécurité décrit dans la demande précédemment citée présente un effet visible en réflexion. Le composant optique de sécurité comprend une structure diffractive gravée sur une couche d'un matériau diélectrique. La structure présente un premier motif comprenant un bas-relief avec un premier ensemble de facettes dont les formes sont déterminées pour simuler une série d'éléments optiques cylindriques concaves ou convexes, visibles en réflexion, ce premier motif étant modulé par un deuxième motif formant un réseau sub longueur d'onde. Un tel composant optique de sécurité présente un effet visuel dynamique de bandes lumineuses de couleurs différentes et défilantes dans des directions opposées lorsqu'il subit une rotation en tilt autour d'un axe parallèle à l'une des directions principales des éléments cylindriques. Des effets visuels dynamiques plus complexes que ceux présentés dans la [Réf. 1], comme par exemple le croisement de deux segments de droite se « déplaçant » dans le même sens à des vitesses différentes ou dans des sens opposés, et/ou le mouvement d'un segment de droite oblique, sont décrits dans la demande de brevet publiée WO2018224512 [Réf. 2] au nom de la déposante.

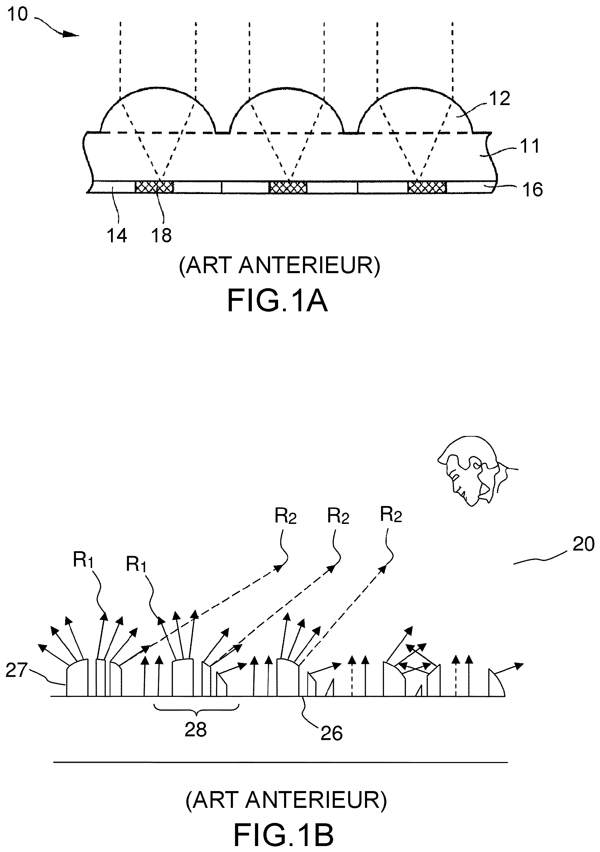

La demande de brevet publiée US2010/0182221 [Réf. 3] décrit par ailleurs un composant optique de sécurité présentant en réflexion un autre typé d'effet visuel dynamique basé sur un effet de type Moiré. La FIG. 1A reproduit une figure de la [Réf. 3] précitée sur laquelle est représentée une vue en coupe d'un élément de sécurité 10, ici un élément de transfert pour billet de banque, comprenant un substrat 11 transparent, un arrangement bidimensionnel 12 de microlentilles, un motif 16 agencé sur une face du substrat opposée au côté en vis-à-vis de microlentilles, ladite face du substrat étant confondue avec un plan focal des microlentilles, le motif 16 étant subdivisé en cellules 14 comprenant chacune un élément de motif 18. Un tel arrangement donne à un observateur une illusion d'un motif qui flotte au-dessus ou au-dessous du plan de microlentilles. Par ailleurs, des effets dynamiques sont visibles par des mouvements de tilt, en calculant les éléments d'images 18 du motif 16.

Un autre composant optique de sécurité présentant en réflexion un effet visuel dynamique basé sur un effet de grandissement de type Moiré est décrit dans la demande de brevet publiée US 20140367957 [Réf. 4]. Par rapport à la [Réf. 3], un tel composant optique de sécurité est avantageux en ce que l'arrangement sur deux plan parallèles séparés est remplacé par une couche structurée compatible des procédés de fabrication des composants de type DOVID. La FIG.1B reproduit un tel composant optique. Le composant optique 20 représenté sur la FIG.1B comprend un arrangement de microlentilles dans lequel on a retiré des « tranches » correspondant à des empreintes de micro-images identiques reproduites périodiquement. On obtient ainsi des éléments en relief 28 (FIG 1B) caractéristiques des micro-images. Les éléments en relief 28 comprennent des microstructures 27 formées de « tronçons » de microlentilles et qui présentent de ce fait des surfaces externes courbes qui suivent le profil des microlentilles. Comme illustré sur la FIG.1B, les surfaces externes courbes des microstructures 27 réfléchissent la lumière incidente suivant les lois de la réflexion, dans toutes les directions (rayons $R_1$), tandis que les surfaces planes 26 entre les microstructures 27 ne réfléchissent la lumière incidence qu'en réflexion spéculaire. Du point de vue d'un observateur, chaque élément en relief 28 résultant de la structuration d'une microlentille selon l'empreinte d'une micro-image correspondante, présentera un point lumineux visible illustré par le rayon $R_2$ (rayon en pointillé réfléchi vers l'observateur) et correspondant à une portion de la micro image grossie par effet de Moiré. En appliquant un mouvement de tilt au composant optique 20, les points lumineux visibles par l'observateur proviendront d'autres régions des microstructures 27, ce qui entraînera la formation de nouvelles images pour l'observateur. Ainsi, les images obtenues par grossissement de Moiré pourront présenter, outre un effet de grandissement, des effets visuels dynamiques de mouvement et d'autres effets résultant des caractéristiques spécifiques des microlentilles, comme par exemple des effets de profondeur.

Cependant, que ce soit dans l'exemple décrit au moyen de la FIG. 1A ou dans celui décrit au moyen de la FIG. 1B, l'effet recherché de Moiré requiert une périodicité dans la micro-image que l'on veut faire apparaître en mouvement à un observateur.

Cette contrainte entraine en particulier une limitation sur la taille de la micro-image gravée dans la microlentille qui est de l'ordre de la taille de la microlentille, ce qui nécessite un équipement particulier pour accéder à de bonnes résolutions dans la formation des images. Une limitation similaire est présente dans le système micro-optique décrit dans le document EP 3 598 204 [Réf. 5] dans lequel l'objet que l'on cherche à former est réduit à une ligne. Dans cet exemple, il s'agit d'un effet dynamique comprenant un mouvement de bandes noires et blanches lorsque l'élément optique est incliné vers le haut/bas dans un intervalle d'angle d'inclinaison donné, tandis que l'observateur ne voit pas d'effet de mouvements lorsque l'élément optique est incliné dans une direction droite/gauche. Plus précisément, le système micro-optique décrit dans [Réf. 5] consiste en un élément optique diffractif plat avec un domaine Q de forme rectangulaire $|x| \leq Lx/2$ $|y| \leq Ly/2$. Le domaine Q est subdivisé en zones élémentaires Qij, chacune de taille inférieure ou égale à 250 microns et centrées sur les points $(x_i, y_j)$, i = 1 ... N, j = 1 ... M. Pour chaque zone $Q_{ij}$ un élément optique est calculé et fabriqué, selon une fonction de phase $\Phi(x,y)$, qui, au point de chaque zone élémentaire $Q_{ij}$, est définie par la formule $\Phi(x,y) = \varphi_{ij}(x,y).\psi(y)$, i = 1 ... N, j = 1 ... M. La fonction $\phi_{ij}(x,y)$ a la forme d'une fonction de phase d'une lentille de Fresnel hors axe centrée sur le point $(x_i, y_j)$. La fonction $\psi(y)$ est une extension périodique de la fonction $\psi(y)$ définie sur l'intervalle $|y| \leq T\psi/2$ de sorte que $\psi(y)$ vaut 1 si $|y| \leq \Delta/2$, et 0 si $|y| > \Delta/2$. Les quantités $T\psi$ et $\Delta$ sont des paramètres spécifiés tels que $\Delta/T\psi \leq \frac{1}{2}$, et la période $T\phi$ des lentilles de Fresnel le long de l'axe Oy, qui est égale à $T\phi = Ly/M$, diffère de la période $T\psi$ mais pas de plus de 5 %. La différence entre la période d'agencement $T\phi$ des lentilles de Fresnel et la période $T\psi$ du masque qui vient « annuler » les facettes des lentilles diffractives selon des bandes de largeur $\Delta$ donnée, crée le mouvement dynamique de déplacement de bandes noires et blanches lors d'un mouvement de tilt selon l'axe x parallèle aux bandes générées par le masque, par un mécanisme similaire à celui d'un mécanisme de Moiré. Cependant, la technique décrite est, comme celle décrite dans [Réf. 3] ou [Réf. 4], limitée à un objet défini notamment par la différence entre les périodes $T\phi$ d'agencement des lentilles de Fresnel et la période $T\psi$ du masque.

La présente demande décrit un composant optique de sécurité avec une structure originale permettant d'accéder à des effets visuels dynamiques tels que décrits dans les [Réf. 3] ou [réf. 4] et notamment l'apparition d'objets graphiques qui semblent se déplacer au-dessus ou au-dessous du plan du composant, mais qui ne sont plus basés sur des effets de type Moiré et qui s'affranchissent ainsi des limitations qui leur sont attachées.

## Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » signifie la même chose que « présentant une marge inférieure et/ou supérieure à 10%, par exemple 5% », de la valeur respective.

Selon un premier aspect, l'invention concerne un composant optique de sécurité selon la revendication 1.

Dans la présente description, une couche transparente dans le visible est définie comme une couche présentant une transmission d'au moins 70%, de préférence au moins 80% pour une longueur d'onde comprise dans le visible, c'est-à-dire une longueur d'onde comprise entre environ 400 nm et environ 800 nm. Une couche ainsi transparente rend possible une observation à l'œil nu des couches situées sous la couche transparente.

Dans la présente description, on appelle « hauteur » d'une facette une distance entre un niveau le plus bas de la facette et un niveau le plus haut, la distance étant mesurée selon un axe perpendiculaire à un plan parallèle au plan du composant.

On appelle « largeur » d'une facette, une largeur de la couronne résultant de la projection de la facette dans un plan parallèle au plan du composant.

Selon un ou plusieurs exemples de réalisation, l'ensemble des facettes ont une hauteur sensiblement identique. La hauteur des facettes est par exemple inférieure à environ 2 microns, avantageusement inférieure à environ 1 micron. Selon un ou plusieurs exemples, les facettes de l'ensemble des facettes présentent des hauteurs différentes. Dans ce cas cependant, les facettes présentent une hauteur maximale. Ladite hauteur maximale est par exemple inférieure à environ 2 microns, avantageusement inférieure à environ 1 micron.

Selon un ou plusieurs exemples de réalisation, l'ensemble des facettes présentent un niveau bas situé dans un même plan. Dans d'autres exemples de réalisation, les niveaux bas des facettes ne se trouvent pas dans le même plan. Dans le cas de facettes de hauteurs différentes, des points médians des facettes situés entre le niveau bas et le niveau haut peuvent par exemple se trouver dans un même plan.

Selon un ou plusieurs exemples, les facettes présentent une largeur comprise entre environ 2 $\mu$m et environ 100 $\mu$m, avantageusement entre environ 2 $\mu$m et environ 80 $\mu$m, avantageusement environ 4 $\mu$m et environ 40 $\mu$m.

Selon un ou plusieurs exemples de réalisation, ladite valeur angulaire minimale de la pente d'une facette (en valeur absolue) est égale à environ 1°. Selon un ou plusieurs exemples de réalisation, ladite valeur angulaire maximale de la pente d'une facette (en valeur absolue) est égale à environ 45°. Selon un ou plusieurs exemples, la valeur angulaire de la pente d'une facette (en valeur absolue) est comprise entre environ 1° et environ 30°, avantageusement entre environ 2° et environ 15°.

Par convention, dans la présente description, le sens positif pour la mesure des valeurs angulaires des pentes des facettes est le sens horaire (ou anti-trigonométrique), l'angle étant mesuré entre un plan parallèle au plan du composant et la surface de la facette.

Dans la présente description, on appelle « région ponctuelle » ou « pixel » d'un sous-ensemble de facette, un secteur angulaire d'une facette dudit sous-ensemble de facettes définie par ses coordonnes polaires, à savoir une coordonnée radiale et une coordonnée angulaire. La coordonnée radiale correspond à la facette sur laquelle se trouve ladite région ponctuelle et la coordonnée angulaire correspond à un angle azimutal moyen par rapport à un axe de référence. Une telle région ponctuelle se présente ainsi sous la forme d'un secteur angulaires présentant deux dimensions prédéterminées, à savoir une largeur égale à la largeur de la facette sur laquelle elle est se trouve et une longueur d'arc qui dépend d'une résolution prédéterminée en azimut recherchée pour un mouvement en azimut. Chaque sous-ensemble de facettes présente ainsi un nombre déterminé fini de régions ponctuelles.

La déposante a montré qu'un tel composant optique de sécurité présente, en réflexion et sous l'effet d'un simple mouvement de tilt et/ou d'azimut, un effet visuel dynamique comprenant par exemple et de façon non limitative un déplacement (translation et/ou rotation) et/ou une déformation d'objets graphiques reconnaissables, les objets graphiques pouvant par ailleurs sembler apparaître au-dessus ou en dessous du plan du composant. Ce même effet de déplacement (translation et/ou rotation) et/ou déformation d'objets graphiques reconnaissables peut être observé à l'œil nu ou au moyen d'un dispositif d'authentification comprenant un dispositif optique d'imagerie. Un tel effet dynamique résulte de la rupture locale d'une propriété de diffusion lumineuse liée à l'altération locale de la surface en des régions ponctuelles données de sous-ensembles de facettes. Il est ainsi possible d'accéder à des effets visuels plus complexes que ceux obtenus par effet de Moiré et on n'est plus contraint par la fabrication de la micro-image au sein d'une microlentille.

La diffusion lumineuse résulte de l'agencement des facettes sous forme d'une pluralité de sous-ensembles d'une ou plusieurs facettes concentrique(s).

Selon un ou plusieurs exemples de réalisation, chaque sous-ensemble de facettes a une dimension maximale (diamètre) comprise 10 $\mu$m et 300 $\mu$m, de préférence entre 50 $\mu$m et 150 $\mu$m. En réduisant la dimension de chaque sous-ensemble de facettes et en rendant minimale la distance entre deux sous-ensembles de facettes adjacents, on augmente la résolution de l'objet graphique puisqu'on diminue la distance entre deux pixels voisins. Ainsi, la distance entre deux sous-ensembles de facettes adjacents définie centre à centre est avantageusement inférieure à une dimension égale à 1,3 fois la dimension d'un sous-ensemble de facettes et avantageusement sensiblement égale à la dimension d'un sous-ensemble de facettes.

Selon un ou plusieurs modes de réalisation, les sous-ensembles de facettes ne comprennent qu'une seule facette. Un effet dynamique pourra être obtenu par un mouvement de rotation azimutale en générant des régions ponctuelles différentes en azimut. Il est également possible de générer un effet « flip flop » d'alternance entre 2 objets graphiques reconnaissable en partitionnant le plan en deux régions azimutales.

Selon un ou plusieurs modes de réalisation, chaque sous-ensemble de facettes comprend une pluralité de facettes, par exemple entre 2 facettes et environ 150 facettes, avantageusement entre 2 facettes et environ 50 facettes, avantageusement entre 3 et environ 50 facettes, avantageusement entre 5 et environ 50 facettes, par exemple entre 5 et 10 facettes. Avec une pluralité de facettes par sous-ensemble de facettes, on peut obtenir un effet dynamique à la fois par un mouvement de tilt et d'azimut.

Pour générer une animation dynamique, on définit une pluralité de groupes de sous-ensembles de facettes, par exemple entre 2 et environ 1000 groupes de sous-ensembles de facettes, avantageusement entre 50 et 300 groupes de sous-ensembles de facettes. Dans chaque groupe de sous-ensembles de facettes, une altération locale de la surface en des régions ponctuelles de coordonnées polaires identiques des sous-ensembles de facettes produit un objet graphique reconnaissable pour un angle de tilt et un angle d'azimut définis par lesdites coordonnées polaires du fait de la rupture de la propriété de diffusion selon cet angle de tilt et cet angle d'azimut. Ainsi, en faisant varier pour chaque groupe les coordonnées polaires des régions ponctuelles qui portent l'altération locale de la surface, on produit, lorsque le composant est éclairé en lumière blanche selon un axe d'éclairage donné, un effet visuel dynamique observable en réflexion par changement de tilt et/ou d'azimut.

Selon la présente description, au moins la coordonnée angulaire varie d'un groupe à l'autre, de telle sorte à produire, lorsque le composant est éclairé selon un axe d'éclairage donné, un effet visuel dynamique observable en réflexion par changement d'azimut. La résolution en azimut est donnée par le nombre de régions ponctuelles ou secteurs angulaires, de chaque facette. Avec une plus grande résolution azimutale, on observera une plus grande continuité dans le mouvement en azimut. Le nombre de régions ponctuelles par facette est par exemple compris entre 2 et 360.

Selon un ou plusieurs modes de réalisation, lesdites coordonnées polaires varient d'un groupe à l'autre, de telle sorte à produire en outre, lorsque le composant est éclairé selon un axe d'éclairage donné, un effet visuel dynamique observable en réflexion par changement de tilt. Avec un plus grand nombre de facettes par sous-ensemble de facettes, par exemple au moins 5 facettes à symétrie de révolution agencées de façon concentrique par ensemble de sous-facettes, on observera une plus grande continuité dans le mouvement en tilt.

Le composant optique de sécurité ainsi décrit permet une authentification plus sûre et une barrière technologique plus forte, du fait de la souplesse de conception du composant pour obtenir l'effet décrit ci-dessus, et présente en outre l'avantage de ne résulter que de la structuration d'une seule couche.

Selon un ou plusieurs exemples de réalisation, l'agencement des facettes dans les sous-ensembles de facettes est identique.

Cependant, en pratique, l'agencement des facettes dans tous les sous-ensembles de facettes peut ne pas être pas identique, l'effet technique restant sensiblement le même, tant que les pentes des facettes qui portent une altération locale de la surface dans les sous-ensembles des facettes sont dans la même gamme de pentes. Il est par exemple possible de prévoir des sous-ensembles de facettes comprenant des facettes avec des pentes supérieures aux pentes des facettes qui portent une altération locale de la surface, et ce afin de créer des effets visuels supplémentaires qui ne sont apparents que pour des angles de tilts beaucoup plus importants et qui peuvent ainsi former une authentification supplémentaire.

Selon un ou plusieurs exemples de réalisation, chaque sous-ensemble de facettes comprend une pluralité de facettes agencées de façon concentriques et l'agencement des facettes dans au moins une partie des sous-ensemble de facettes est tel que les facettes sont agencées avec des pentes variables et dont la variation est croissante en valeur absolue du centre du sous-ensemble de facettes vers le bord dus sous-ensemble de facettes, respectivement décroissante, le sous-ensemble de facettes formant une structure de type « lentille de Fresnel ». Chaque lentille de Fresnel présente un diamètre inférieur à 300 $\mu$m de telle sorte qu'elle n'est pas visible à l'œil nu. L'agencement d'une pluralité de lentilles de Fresnel les unes à côté des autres dans un plan parallèle au plan du composant permet de générer des lobes de diffusion centrés sur des angles d'observation qui dépendent des pentes des facettes.

Selon un ou plusieurs exemples de réalisation, l'agencement des facettes de façon concentrique dans au moins une partie des sous-ensemble de facettes est tel que les facettes sont agencées avec des pentes alternativement positives et négatives, variables, et dont la variation est croissante en valeur absolue du centre du sous-ensemble de facettes vers le bord dus sous-ensemble de facettes, respectivement décroissante, le sous-ensemble de facettes formant une structure que l'on appellera « axicon » dans la présente description. Chaque axicon présente un diamètre inférieur à 300 $\mu$m de telle sorte qu'il n'est pas visible à l'œil nu. L'agencement d'une pluralité d'axicons les uns à côté des autres dans un plan parallèle au plan du composant permet de générer des lobes de diffusion centrés sur des angles d'observation qui dépendent des pentes des facettes.

Quel que soit le type d'agencement des facettes au sein des sous-ensemble de facettes, on cherchera selon des exemples de réalisation préférés à diminuer au maximum la distance entre deux sous-ensembles de facettes voisins de telle sorte à accroître la résolution des objets graphiques générés.

Selon un ou plusieurs exemples de réalisation, un nombre de sous-ensemble de facettes est compris entre 5 sous-ensembles de facettes, par exemple pour une authentification avec un dispositif optique, et environ 100 000 sous-ensembles de facettes, ce qui correspond par exemple à structure diffractive de surface de 70 cm$^2$ formée de sous-ensembles de diamètre 70 $\mu$m. En pratique, dans d'autres exemples de réalisation, un nombre de sous-ensembles de facettes est compris entre environ 300 et environ 40 000. Ce nombre est par exemple approprié pour des sous-ensembles de facettes de diamètre compris entre 70 $\mu$m et 200 $\mu$m, pour faire une structure diffractive dont la surface est comprise entre environ 200 mm$^2$ et environ 800 mm$^2$, ce qui correspond par exemple à des surfaces de fils de sécurité ou de patchs.

Selon un ou plusieurs exemples de réalisation, les sous-ensembles de facettes sont agencés selon un arrangement régulier présentant une maille hexagonale, ce qui permet de rendre maximal le nombre de sous-ensembles de facettes sur une surface donnée. D'autres mailles sont possibles, par exemple une maille carrée.

Selon un ou plusieurs exemples de réalisation, ladite altération locale de la surface comprend une pente locale sensiblement nulle de la facette au niveau de ladite région ponctuelle. Cette rupture de la pente de la facette produit un changement local de la direction de réflexion qui se traduit par un point fortement contrasté (par exemple noir sur fond blanc) dans la direction d'observation définie en tilt et azimut par les coordonnées polaires des régions ponctuelles pour lesquelles la surface est altérée. En introduisant cette rupture de pente pour des régions ponctuelles de mêmes coordonnées polaires d'un groupe de sous-ensembles de facettes donnés tels qu'ils forment un objet graphique reconnaissable, on crée un objet à fort contraste dans ladite direction d'observation. On peut alors produire cette même rupture de pente pour une autre région ponctuelle d'un autre groupe de sous-ensemble de facettes de telle sorte que cet autre groupe forme un objet graphique reconnaissable identique ou non, pour donner l'impression d'un objet qui se déplace lorsqu'on change le tilt et/ou l'azimut et/ou qui se déforme si l'objet graphique est modifié.

Selon un ou plusieurs exemples de réalisation, la deuxième couche comprend un matériau métallique. Le matériau métallique comprend l'un des matériaux ou un alliage de matériaux choisis parmi : Aluminium (Al), Argent (Ag), Chrome (Cr), Or (Au), Cuivre (Cu). Par exemple, une épaisseur de la couche en matériau métallique est supérieure à environ 2 à 3 fois l'épaisseur de peau du métal ou alliage dont elle est formée dans la plage de fréquence du visible ; par exemple une épaisseur de la couche en matériau métallique est comprise entre environ 20 nm et environ 60 nm pour de l'aluminium.

Selon un ou plusieurs exemples de réalisation, le matériau diélectrique de la première couche présente un premier indice de réfraction et la deuxième couche comprend un matériau diélectrique présentant un deuxième indice de réfraction tel que la différence entre le deuxième indice de réfraction et le premier indice de réfraction est supérieure ou égale à environ 0,3, avantageusement supérieure ou égale à environ 0,5. Par exemple ladite deuxième couche comprend un matériau choisi parmi : sulfure de zinc (ZnS), dioxyde de titane ($TiO_2$) nitrure de silicium ($Si_3N_4$).

Selon un ou plusieurs exemples de réalisation, la deuxième couche comprend un empilement de couches de nature à produire un filtre interférentiel, par exemple un empilement de matériaux de faible et haut indice de réfraction par exemple un empilement tel que décrit dans la demande de brevet WO2001003945 [Réf. 6]. Par exemple, un tel empilement peut comprendre un matériau avec un indice de réfraction de 1.5 Al (5nm) / ZnS (65nm) / Al (30nm).

De manière générale, le matériau dont est formée la deuxième couche permet de conférer au composant une bande spectrale de réflexion dans le visible et de rendre visible ladite première structure diffractive. De tels matériaux adaptés pour ladite deuxième couche sont décrits par exemple dans le brevet US4856857 [Réf. 7].

Selon un ou plusieurs exemples de réalisation, dans au moins une première région, ledit premier motif est modulé par un deuxième motif formant un réseau de diffraction à l'ordre zéro. Plus précisément, le premier réseau de diffraction est un réseau périodique unidimensionnel ou bidimensionnel, de période comprise entre 150 nm et 500 nm, avantageusement entre 200 nm et 400 nm, et qui se comporte dans le visible comme un réseau dit « sub longueur d'onde » c'est-à-dire de période inférieure à la plus petite longueur d'onde utilisée pour observer le composant. Le réseau est déterminé pour produire, après dépôt de la deuxième couche réfléchissante, un filtre résonant dans une bande spectrale déterminée en fonction notamment des caractéristiques du réseau.

Ainsi, selon un premier exemple de réalisation, le réseau de diffraction sub longueur d'onde est configuré pour produire un filtre soustractif en longueur d'onde, appelé dans la suite de la description *« filtre résonant soustractif diélectrique ».* Un exemple d'un tel filtre est par exemple le DID™ (pour *« Diffractive Identification Device »),* fabriqué par la déposante. Dans ce premier exemple de réalisation, la deuxième couche réfléchissante est une couche en matériau diélectrique transparent, et le réseau de diffraction sub longueur d'onde, à une dimension, est configuré pour permettre l'excitation de modes guidés au sein de la couche réfléchissante transparente, formant un filtre résonant passe bande en réflexion, dont la bande spectrale de résonance est centrée sur une longueur d'onde déterminée en fonction des caractéristiques du réseau et des natures des couches. La couche réfléchissante transparente comprend une couche mince, d'épaisseur préférentiellement comprise entre 20 nm et 200 nm et préférentiellement entre 60 nm et 150 nm, et présente un deuxième indice de réfraction qui diffère de l'indice de réfraction des couches avoisinantes d'au moins 0,3, avantageusement d'au moins 0,5. Selon un ou plusieurs exemples de réalisation, ladite couche mince en matériau diélectrique est une couche en matériau dit « haut indice » de réfraction (ou « HRI » *pour « High Refractive Index »),* présentant un indice de réfraction compris entre 1,8 et 2,9, avantageusement entre 2,0 et 2,4 et les couches avoisinantes sont des couches dites « bas indice » de réfraction, présentant des indices de réfraction compris entre 1,3 et 1,8, avantageusement entre 1,4 et 1,7. Un tel filtre résonant soustractif diélectrique est décrit par exemple dans le brevet FR2509873B1 [Réf. 8].

En fonctionnement, l'effet d'un tel filtre résonant diélectrique soustractif se superpose à l'effet des sous-ensembles de facettes concentriques pour produire un effet coloré dans la direction d'observation.

Selon un autre exemple de réalisation, le réseau de diffraction sub longueur d'onde est configuré pour produire un filtre résonant coupe-bande en réflexion. Il s'agit d'un filtre plasmonique en réflexion, appelé *« R'olasmon »* dans la présente description, et tel que décrit par exemple dans la demande brevet EP2771724 [Réf. 9] ou dans la demande de brevet EP3099513 [Réf. 10]. Pour ce faire, la deuxième couche réfléchissante est métallique et comprend une couche mince en matériau métallique, par exemple de l'argent ou de l'aluminium, avantageusement d'épaisseur supérieure à 40 nm. Avantageusement, la couche réfléchissante métallique est suffisamment épaisse pour présenter une transmission maximale résiduelle en fonction de la longueur d'onde de 2%.

En fonctionnement, l'effet d'un tel filtre plasmonique R'Plasmon se superpose à l'effet des sous-ensembles de facettes concentriques pour produire un effet coloré dans la direction d'observation.

Dans le cas d'un premier motif modulé par un deuxième motif, une largeur des facettes est avantageusement supérieure ou égale à environ 4 fois, avantageusement supérieure ou égale à environ 8 fois ladite période du réseau. La dimension minimale pourra donc être choisie en fonction de la période du réseau. Par exemple, une dimension minimale de la largeur des facettes est égale à environ 2 μm.

Dans le cas d'un premier motif modulé par un deuxième motif, ladite altération locale de la surface peut comprendre une modification locale d'une propriété dudit réseau périodique, par exemple une propriété choisie parmi le profil, l'azimut (orientation du vecteur réseau), la profondeur et la période du réseau ou bien l'absence locale dudit réseau.

Selon un ou plusieurs exemples de réalisation, dans le cas d'un premier motif *non* modulé par un deuxième motif, ladite altération locale de la surface peut comprendre une modulation locale du premier motif par un deuxième motif formant un réseau périodique, de période prédéterminée comprise entre 150 nm et 500 nm, ledit réseau étant déterminé pour produire, après dépôt de la deuxième couche, un effet résonant. Un réseau est par exemple conforme à ceux décrits précédemment pour produire un effet de type DID™ ou R'Plasmon.

Selon un ou plusieurs exemples de réalisation, le composant optique de sécurité selon le premier aspect comprend au moins une deuxième structure gravée sur ladite première couche, ladite deuxième couche recouvrant au moins en partie ladite deuxième structure. La deuxième structure est configurée pour former par exemple et de façon non limitative, une structure diffusante, une structure holographique, une structure diffractive permettant de réaliser par exemple un effet dit Alphagram® développée par la déposante

Selon un ou plusieurs exemples de réalisation, le composant optique de sécurité selon le premier aspect comprend une ou plusieurs couches additionnelles en fonction des besoins de l'application, sans que cette ou ces couches additionnelles ne contribuent nécessairement à l'effet visuel recherché.

Ainsi, selon un ou plusieurs exemples de réalisation, le composant optique de sécurité est configuré pour la sécurisation d'un objet, par exemple un document ou un produit, et comprend en outre, sur la face opposée à la face d'observation, une couche adaptée pour le transfert du composant sur le document ou le produit, par exemple une couche adhésive ou une couche d' adhésif réactivable.

Selon un ou plusieurs exemples de réalisation, le composant optique de sécurité comprend en outre, du côté de la première face d'observation, un film support destiné à être détaché après transfert du composant sur le document ou le produit.

Selon un ou plusieurs exemples de réalisation, le composant optique de sécurité est configuré pour la fabrication d'une piste de sécurité pour la sécurisation des billets de banque, et comprend du côté de la première face d'observation et/ou sur la face opposée à la première face d'observation, une ou plusieurs couches de protection.

Selon un deuxième aspect, la présente description concerne un objet sécurisé, par exemple un document de valeur sécurisé, comprenant un substrat et un composant optique de sécurité selon le premier aspect, déposé sur ledit substrat ou sur une des couches dudit substrat dans le cas d'un substrat multicouches.

Un tel objet sécurisé est par exemple, et de façon non limitative : un billet de banque, un document d'identité ou de voyage, sur substrat papier ou polymère.

Selon un troisième aspect, la présente description concerne des procédés de fabrication de composants optiques de sécurité selon le premier aspect.

Ainsi, la présente description concerne un procédé de fabrication d'un composant optique de sécurité selon la revendication 13.

Selon un quatrième aspect, la présente description concerne un procédé d'authentification à l'œil nu d'un objet sécurisé selon le deuxième aspect, le procédé d'authentification comprenant :

- l'observation du composant optique de sécurité dudit objet sécurisé selon un axe d'observation formant un angle d'observation donné avec l'axe d'éclairage ;
- un mouvement en tilt et/ou en azimut dudit objet sécurisé résultant en un effet visuel dynamique comprenant un déplacement et/ou une déformation dudit objet graphique, ledit objet graphique étant reconnaissable à l'œil nu.

Dans une authentification à l'œil nu du composant optique de sécurité d'un objet sécurisé, le changement de tilt et/ou d'azimut peut comprendre un mouvement en tilt du composant, c'est-à-dire une rotation du composant selon un axe contenu dans le plan du composant et/ou un mouvement en azimut du composant, c'est-à-dire une rotation selon un axe perpendiculaire au plan du composant, tandis que l'observation se fait selon un axe d'observation donné. L'angle d'observation est par exemple défini par rapport à une direction d'éclairage verticale. Selon un ou plusieurs exemples de réalisation, l'angle d'observation est compris entre environ 30° et environ 60°. Par exemple, l'angle d'observation est égal à environ 45°, ce qui correspond, pour un éclairage vertical, à une direction d'observation classique pour un observateur lors d'une authentification à l'œil nu.

Pour une observation d'un objet graphique à l'œil nu, au moins un objet graphique formé par au moins un des groupes de sous-ensembles de facettes présente une dimension minimale supérieure à 500 μm, de préférence supérieure à 1 mm, de préférence supérieure à 2 mm, de préférence supérieure à 5 mm. Une telle dimension minimale permet de générer un objet graphique reconnaissable à l'œil nu.

Selon un cinquième aspect, la présente description concerne un procédé d'authentification d'un objet sécurisé selon le deuxième aspect au moyen d'un dispositif optique d'imagerie comprenant un axe optique d'imagerie, ledit procédé d'authentification comprenant :

- la formation d'une image dudit composant optique de sécurité, au moyen du dispositif optique d'imagerie, ledit axe optique d'imagerie formant un angle d'observation donné avec l'axe d'éclairage ;
- un mouvement en tilt et/ou en azimut dudit objet sécurisé ou un mouvement en tilt et/ou en azimut dudit axe optique d'imagerie, résultant en un effet visuel dynamique comprenant un déplacement et/ou une déformation dudit objet graphique, ledit objet graphique étant reconnaissable par ledit dispositif optique d'imagerie.

Ainsi, dans une authentification au moyen d'un dispositif d'authentification comprenant un dispositif optique d'imagerie, par exemple une caméra d'un appareil de type smartphone, le changement de tilt et/ou d'azimut peut comprendre un déplacement en tilt ou en azimut du dispositif d'authentification lui-même, c'est-à-dire respectivement autour d'un axe situé dans un plan du composant ou autour d'un axe perpendiculaire au plan du composant.

Selon un ou plusieurs exemples de réalisation, l'axe d'éclairage et l'axe optique d'imagerie sont sensiblement confondus, la source d'éclairage étant incluse dans le dispositif d'authentification.

Pour une observation d'un objet graphique au moyen d'un dispositif optique d'imagerie, au moins un objet graphique peut être constitué d'un objet graphique non figuratif, par exemple un QR code. Par ailleurs, du fait du grandissement éventuel du dispositif optique d'imagerie, les dimensions des objets graphiques formés par les groupes de sous-ensembles de facettes peuvent présenter des dimensions inférieures aux dimensions requises pour une perception oculaire.

**Brève description des figures**

D'autres caractéristiques et avantages de l'invention apparaîtront à la lecture de la description qui suit, illustrée par les figures suivantes :

La FIG. 1A (déjà décrite) illustre un exemple d'élément de sécurité décrit dans la [Réf.3] de l'état de l'art.

La FIG. 1B (déjà décrite) illustre un exemple d'élément de sécurité décrit dans la [Réf.4] de l'état de l'art.

La FIG. 2A illustre de façon schématique une vue en coupe (partielle) d'un exemple de réalisation d'un composant selon la présente description.

La FIG. 2B illustre de façon schématique une vue en coupe (partielle) d'un autre exemple de réalisation d'un composant selon la présente description.

La FIG. 3A représente les paramètres d'observation (tilt) d'un composant optique de sécurité selon la présente description, dans un exemple d'observation à l'œil nu.

La FIG. 3B représente les paramètres d'observation (tilt) d'un composant optique de sécurité selon la présente description, dans un exemple d'observation au moyen d'un dispositif d'authentification comprenant un dispositif optique d'imagerie, par exemple un dispositif d'authentification de type smartphone.

La FIG. 3C représente les paramètres d'observation (azimut) d'un composant optique de sécurité selon la présente description.

La FIG. 4A représente de façon schématique une vue de dessus et une vue en coupe d'un exemple d'un sous-ensemble de 5 facettes concentriques de type « lentille de Fresnel ».

La FIG. 4B représente de façon schématique une vue de dessus et une vue en coupe d'un exemple d'un sous-ensemble de 5 facettes concentriques de type « axicon ».

La FIG. 5A représente la répartition d'intensité lumineuse en fonction de l'angle d'observation pour des facettes avec des angles différents.

La FIG. 5B illustre de façon schématique les régions ponctuelles ou pixels dans un sous-ensemble comprenant 4 facettes et pour 20 valeurs moyennes de l'azimut.

La FIG. 5C illustre dans un sous-ensemble de facettes un exemple dans lequel pour un pixel d'une facette la surface desdits pixels est altérée.

La FIG. 6A représente un premier exemple d'un sous-ensemble de 4 facettes de type lentille de Fresnel, dans lequel (a) aucun pixel ne présente de surface altérée, (b) la facette d'un pixel est altérée au moyen d'une annulation de la pente et (c) la facette d'un pixel est altérée au moyen d'une modification d'un paramètre d'un réseau de diffraction sub longueur d'onde qui module le sous-ensemble de facettes.

La FIG. 6B représente un deuxième exemple d'un sous-ensemble de 4 facettes de type axicon, de même hauteur, dans lequel (a) aucun pixel ne présente de surface altérée, (b) la facette d'un pixel est altérée au moyen d'une annulation de la pente et (c) la facette d'un pixel est altérée au moyen d'une modification d'un paramètre d'un réseau de diffraction sub longueur d'onde qui module le sous-ensemble de facettes.

La FIG. 6C représente un deuxième exemple d'un sous-ensemble de 4 facettes de type axicon, de même largeur, dans lequel (a) aucun pixel ne présente de surface altérée, (b) la facette d'un pixel est altérée au moyen d'une annulation de la pente et (c) la facette d'un pixel est altérée au moyen d'une modification d'un paramètre d'un réseau de diffraction sub longueur d'onde qui module le sous-ensemble de facettes.

La FIG. 7 illustre de façon schématique les opérations mathématiques permettant le calcul de la structure, dans un exemple de réalisation.

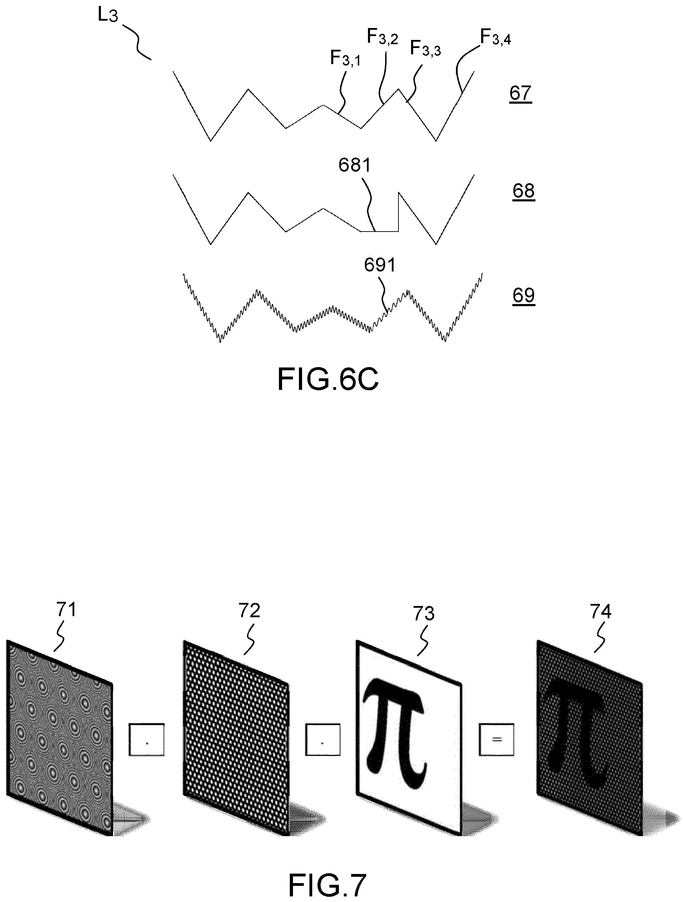

La FG. 8A illustre le résultat du calcul schématisé sur la FIG. 7, dans un exemple de réalisation.

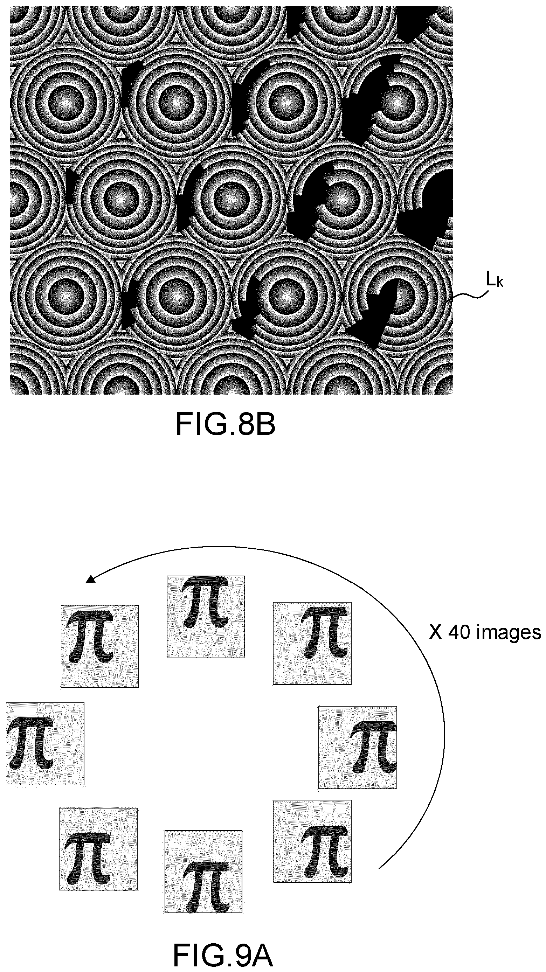

La FIG. 8B illustre un détail de la FIG. 7.

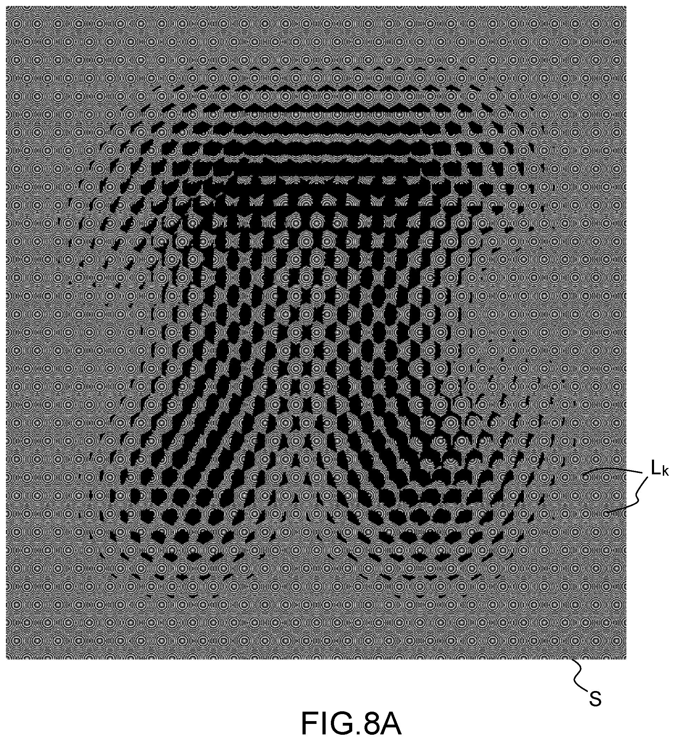

La FIG. 9A montre de façon schématique l'effet dynamique en azimut obtenu au moyen d'une structure du type de celle illustrée sur la FIG. 8A.

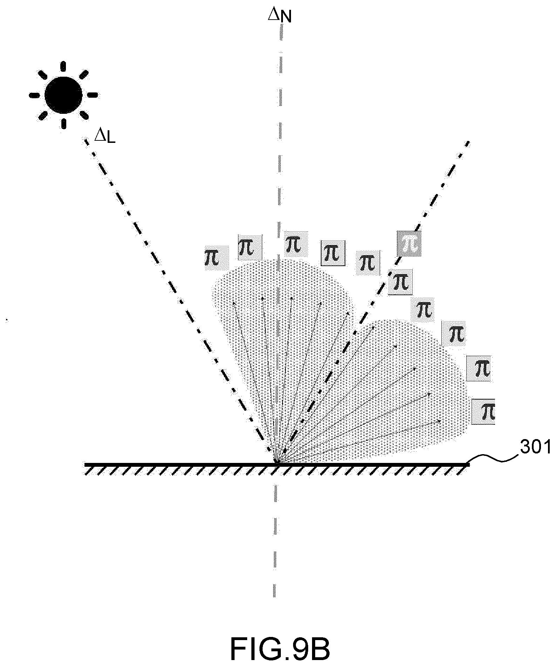

La FIG. 9B montre de façon schématique l'effet dynamique en tilt obtenu au moyen d'une structure du type de celle illustrée sur la FIG. 8A.

## Description détaillée

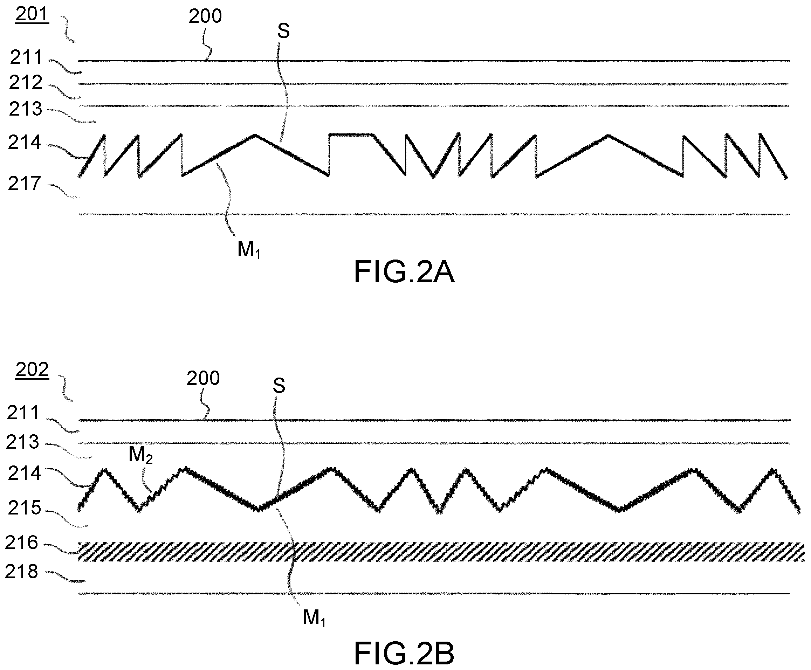

Sur les figures, les éléments ne sont pas représentés à l'échelle pour une meilleure visibilité. La FIG. 2A et la FIG. 2B représentent de façon schématique et selon des vues en coupe (partielles) deux exemples de composants optiques de sécurité selon la présente description. Le composant optique de sécurité 201 représenté sur la FIG. 2A représente par exemple un composant optique de sécurité destiné à être transféré sur un document ou un produit en vue de sa sécurisation. Il comprend selon cet exemple un film support 211, par exemple un film en matériau polymère, par exemple un film en polyéthylène téréphtalate (PET) de quelques dizaines de micromètres, typiquement 15 à 100 $\mu$m, ainsi qu'une couche de détachement 212, par exemple en cire naturelle ou synthétique. La couche de détachement permet de retirer le film support en polymère 211 après transfert du composant optique sur le produit ou document à sécuriser. Le composant optique de sécurité 201 comprend par ailleurs une première couche 213 en matériau diélectrique, présentant un premier indice de réfraction $n_1$ et au moins une première structure diffractive S, comprenant un premier motif $M_1$ estampé sur ladite première couche 113 et qui sera décrite plus en détails par la suite.

Dans l'exemple de la FIG. 2A, le composant optique de sécurité 201 comprend également une deuxième couche 214, réfléchissante, recouvrant au moins en partie ladite première structure S, et présentant une bande spectrale de réflexion dans le visible. La deuxième couche 214 est par exemple une couche métallique ou une couche dite de variation d'indice présentant un indice de réfraction différent de celui de la première couche 213, la différence d'indice entre les couches 213 et 214 présentant une valeur au moins égale à 0,3, avantageusement une valeur au moins égale à 0,5. La couche 214 permet d'assurer la réflexion de la lumière incidente.

Le composant optique de sécurité comprend par ailleurs une ou plusieurs couches optionnelles, non fonctionnelles optiquement mais adaptées à l'application.

Par exemple, dans l'exemple de la FIG. 2A, le composant optique de sécurité comprend en outre une couche d'adhésif 217, par exemple une couche d'adhésif réactivable à chaud, pour le transfert du composant optique de sécurité sur le produit ou document.

En pratique, comme cela sera détaillé par la suite, le composant optique de sécurité peut être fabriqué en empilant les couches sur le film support 211, puis le composant est transféré sur un document/produit à sécuriser grâce à la couche d'adhésif 217. Optionnellement, le film support 211 peut alors être détaché, par exemple au moyen de la couche de détachement 212. La face principale d'observation 200 du composant optique de sécurité se trouve ainsi du côté de la première couche 213 opposé à la face structurée de la couche 213.

Le composant optique de sécurité 202 représenté sur la FIG. 2B représente par exemple un composant optique de sécurité destiné à la sécurisation de billets de banque ; il s'agit par exemple d'une partie d'un fil de sécurité destiné à être intégré dans le papier pendant la fabrication du billet ou d'une piste laminée couvrant une fenêtre dans le papier ou d'un patch. Dans cet exemple, le composant 202 comprend comme précédemment un film support 211 (12 à 50 $\mu$m) qui servira également de film de protection au fil de sécurité, et, comme dans l'exemple de la FIG. 2A, une première couche 213 en matériau diélectrique présentant un premier indice de réfraction $n_1$, au moins une première structure diffractive S, comprenant un premier motif $M_1$ modulé par un deuxième motif $M_2$, par exemple un réseau diffractif sub longueur d'onde, estampée sur ladite première couche 213 et qui sera décrite plus en détails par la suite. Une deuxième couche 214 recouvre au moins en partie ladite première structure S, et présente une bande spectrale de réflexion dans le visible. Le composant optique de sécurité 202 comprend par ailleurs, dans l'exemple de la FIG. 2B, un ensemble des couches 215, 216, 218 optionnelles. La couche 215 (optionnelle) est par exemple une couche en matériau diélectrique, par exemple une couche transparente ou une couche colorée opaque qui permet d'augmenter le contraste ; la couche 216 (optionnelle) est par exemple une couche de sécurité, par exemple une couche discontinue avec un motif spécifique imprimé localement avec une encre UV pour réaliser un marquage complémentaire contrôlable à l'œil ou en machine ; et la couche 218 (optionnelle) est par exemple une couche de protection, par exemple un deuxième film polymère ou un vernis. Dans le cas d'une piste laminée, la couche 218 peut être une couche adhésive. Comme dans l'exemple précédent, la fabrication peut être réalisée par empilement des couches sur le film support 211. La couche diélectrique 215 et la couche de sécurité 216 peuvent ne former qu'une seule couche. La couche de protection (ou couche adhésive) 218 et la couche 215 peuvent également ne former qu'une seule et même couche.

Il apparaitra à l'homme du métier que d'autres couches non fonctionnelles optiquement peuvent être ajoutées en fonction des besoins de l'application dans chacun des exemples représentés sur les FIGS. 2A et 2B et que les variantes de réalisation présentées sur les FIGS. 2A et 2B peuvent être combinées.

A noter que si les couches additionnelles, non fonctionnelles optiquement, par exemple la couche 217, ou les couches 215, 216, 218, sont transparentes, ainsi que le support de destination, le composant optique de sécurité pourra être visible des deux côtés, avec une inversion des courbures des éléments optiques générés.

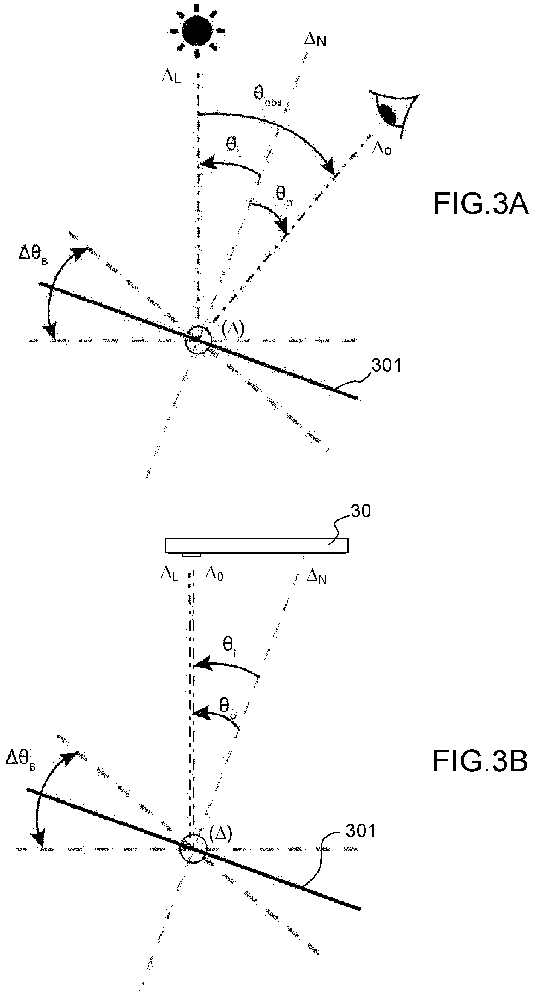

La FIG. 3A représente les paramètres d'observation d'un composant optique de sécurité 301 selon la présente description, dans un exemple d'observation à l'œil nu.

On note $\Delta_L$ l'axe d'éclairage, par exemple un éclairage vertical correspondant à la lumière naturelle, on note $\Delta_O$ l'axe d'observation correspondant à la direction d'observation par un observateur (symbolisé par un œil sur la FIG. 3A) et $\theta_{obs}$ l'angle d'observation entre les axes $\Delta_L$ et $\Delta_O$. Dans la suite de la description, on assimile $\theta_{obs}$ à la valeur absolue de la mesure angulaire de l'angle d'observation.

En opération, lors d'un contrôle de l'authenticité d'un document sécurisé au moyen d'un composant optique de sécurité conforme à la présente description, celui-ci subit une rotation (tilt) autour d'un axe de tilt $\Delta$ contenu dans le plan du composant et/ou une rotation azimutale autour de l'axe $\Delta_N$ perpendiculaire au plan du composant.

Lors d'une authentification à l'œil nu, les directions d'éclairage et d'observation sont fixes et les mouvements en tilt et en azimut du composant se traduisent par une variation de l'angle d'incidence $\theta i$ de la lumière incidente sur le composant, défini par rapport à un axe $\Delta_N$ normal au plan du composant ainsi qu'une variation de l'angle azimutal. Par convention, dans la présente description, le sens positif de l'angle d'incidence est le sens trigonométrique.

La FIG. 3B représente les paramètres d'observation d'un composant optique de sécurité selon la présente description, dans un exemple d'observation au moyen d'un dispositif optique d'imagerie 30, par exemple une caméra d'un appareil d'authentification de type smartphone. Dans cet exemple, l'axe d'éclairage $\Delta_L$ est sensiblement confondu avec l'axe d'observation $\Delta_O$ qui est l'axe optique du dispositif d'imagerie.

En opération, lors d'un contrôle de l'authenticité d'un document sécurisé au moyen d'un composant optique de sécurité conforme à la présente description, on peut soit faire subir au composant 301 une rotation (tilt) autour d'un axe de tilt $\Delta$ contenu dans le plan du composant ou une rotation azimutale autour de l'axe $\Delta_N$ perpendiculaire au plan du composant, soit déplacer en tilt et en azimut le dispositif optique d'imagerie.

Lors d'une authentification, les directions d'éclairage et d'observation restent confondues et les mouvements en tilt et en azimut du dispositif d'authentification se traduisent par une variation de l'angle d'incidence $\theta i$ de la lumière incidente sur le composant, défini par rapport à un axe $\Delta_N$ normal au plan du composant ainsi qu'une variation de l'angle azimutal.

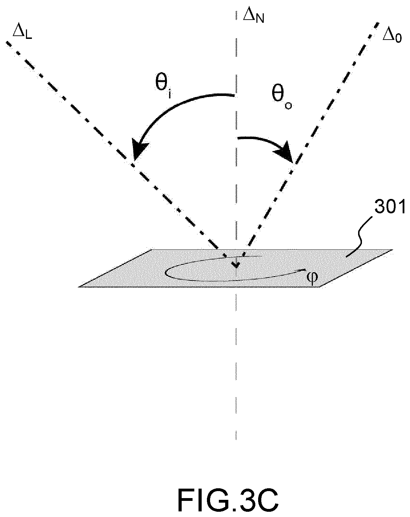

La FIG. 3C représente les paramètres d'observation d'un composant optique de sécurité 301 selon la présente description. Comme illustré sur cette figure, l'observation d'un composant optique selon la présente description se fait non seulement en tilt (Fig. 3A et Fig. 3B mais aussi en azimut. On note $\varphi$ l'angle azimutal, mesuré par rapport à un axe arbitraire.

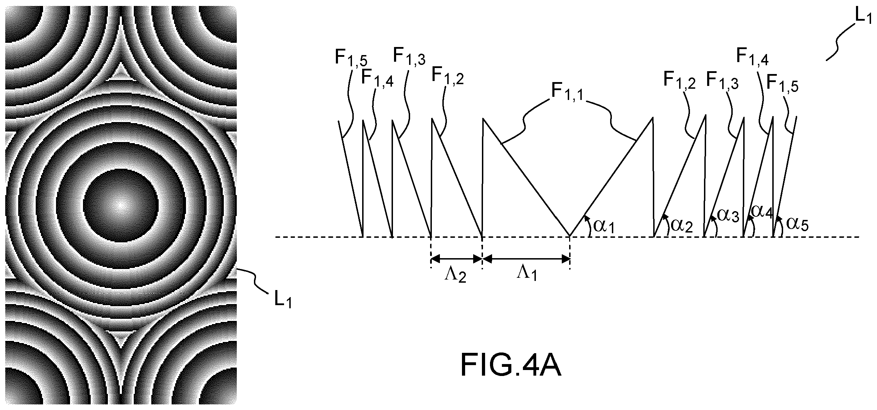

La FIG. 4A représente de façon schématique une vue de dessus et une vue en coupe d'un exemple d'un sous-ensemble $L_1$ de 5 facettes concentriques $F_{1,1}$, $F_{1,2}$, $F_{1,3}$, $F_{1,4}$, $F_{1,5}$, de type « lentille de Fresnel ».

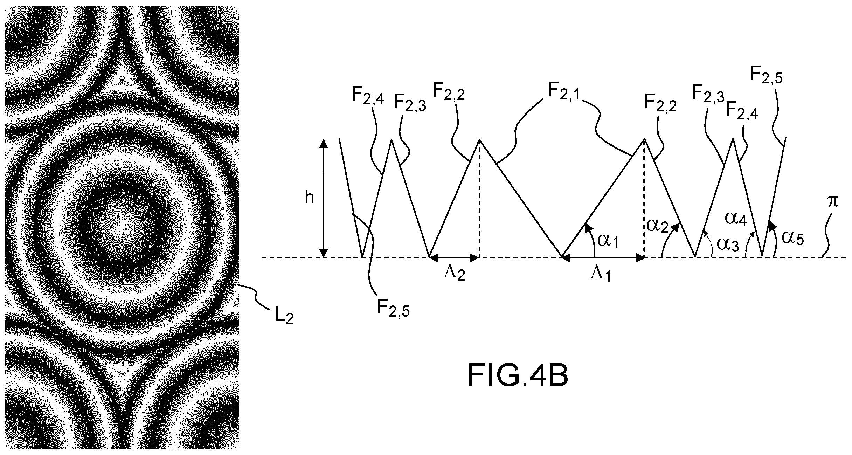

Comme cela est visible sur la FIG. 4A, les facettes des sous-ensembles de facettes sont séparées par des parois sensiblement verticales. Ces parois verticales peuvent introduire des ombrages et de ce fait des pertes énergétiques, aussi des sous-ensembles de facettes de type axicon tels que décrits en relation avec la FIG. 4B sont généralement préférés.

La FIG. 4B représente de façon schématique une vue de dessus et une vue en coupe d'un exemple d'un sous-ensemble $L_2$ de 5 facettes concentriques $F_{2,1}$, $F_{2,2}$, $F_{2,3}$, $F_{2,4}$, $F_{2,5}$, de type « axicon ».

L'ensemble des facettes sont concentriques. Elles sont caractérisées par une hauteur h, définie par la distance entre un niveau le plus bas de la facette et un niveau le plus haut, la distance étant mesurée selon un axe perpendiculaire au plan parallèle au plan du composant. Dans les exemples des FIG.4A et de la FIG. 4B, les niveaux bas des facettes se trouvent sur un même plan $\pi$ parallèle au plan du composant, mais d'autres configurations sont possibles. Par ailleurs, dans ces exemples, les facettes ont toutes la même hauteur h, ladite hauteur étant inférieure à environ 2 $\mu$m, avantageusement inférieure à environ 1 $\mu$m, par exemple comprise entre environ 0.5$\mu$m et environ 1$\mu$m.

Les facettes sont également caractérisées par une largeur $\Lambda_i$, définie par la dimension de la facette selon la direction de variation de la pente, projetée dans un plan parallèle au plan du composant. La largeur est généralement comprise par exemple entre environ 2 $\mu$m et environ 100 $\mu$m, par exemple entre environ 2 $\mu$m et environ 80 $\mu$m, par exemple environ 4 $\mu$m et environ 40 $\mu$m.

Les facettes comprennent des pentes dont les valeurs angulaires $\alpha_i$ sont comprises, en valeur absolue, entre une valeur angulaire minimale, par exemple 1° et une valeur angulaire maximale, par exemple 45°. Par exemple, les valeurs angulaires $\alpha_i$ sont comprises entre environ 2° et environ 15°.

Dans d'autres exemples de réalisation, pour obtenir des valeurs angulaires des pentes des facettes identiques, on pourra avoir des hauteurs de facettes différentes et des largeurs identiques.

Le motif $M_1$ comprend une pluralité de sous-ensembles de facettes, par exemple entre quelques centaines et quelques dizaines de milliers de sous-ensembles de facettes, par exemple des sous-ensembles de facettes de type lentilles de Fresnel ou axicons, telles que décrites ci-dessus.

Dans des exemples de réalisation, l'agencement des facettes dans les sous-ensembles de facettes est identique. Cependant, l'agencement des facettes dans les sous-ensembles de facettes peut ne pas être identique sans que l'effet technique soit modifié.

Chaque sous-ensemble de facettes a une dimension maximale (diamètre) comprise 10 $\mu$m et 300 $\mu$m, de préférence entre 50 $\mu$m et 150 $\mu$m.

Par ailleurs, chaque sous-ensemble de facettes peut ne comprendre qu'une seule facette. Pour générer des objets graphiques de meilleure résolution, on privilégiera une pluralité de facettes par sous-ensemble de facettes, par exemple des sous-ensembles de facettes constitués d'un nombre de facettes compris entre 5 et environ 50, avantageusement entre 5 et 10.

Dans les exemples des FIG. 4A et FIG. 4B, l'agencent des sous-ensembles de facettes est hexagonal, ce qui permet de maximiser la surface couverte par les sous-ensembles de facettes. D'autres agencements sont possibles, par exemple agencement avec une maille carrée.

Une telle structure permet de diffuser la lumière dans des lobes de diffusion qui dépendent de la pente, comme cela est décrit ci-dessous.

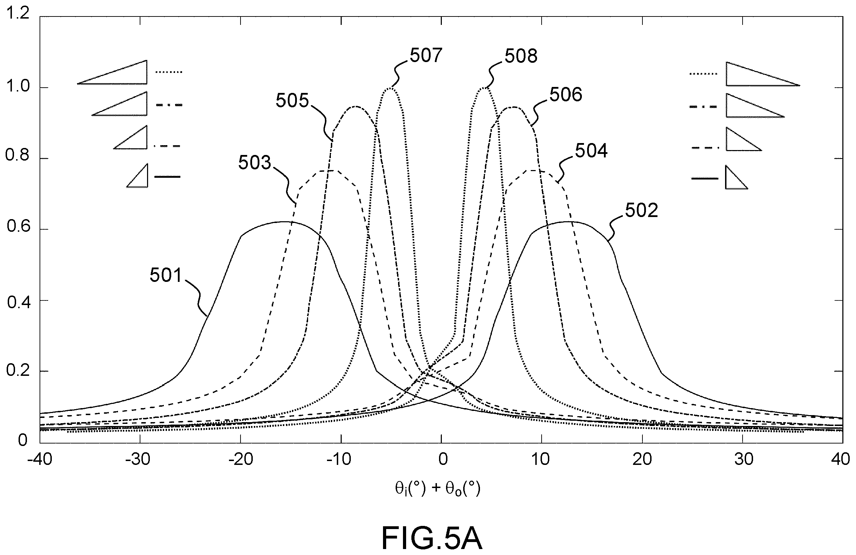

La FIG. 5A représente la répartition d'intensité lumineuse en fonction de l'angle d'observation, et plus précisément en fonction de $\theta_0 + \theta_i$. Ainsi, $\theta_0 + \theta_i = 0$ correspond à des angles d'incidence et d'observation de mesures opposées, c'est-à-dire à une observation dans des conditions de réflexion spéculaire. La réflexion spéculaire correspond dans la présente description à la position du composant qui permet une réflexion de la lumière incidente avec un angle de réflexion de mesure opposée à celle de l'angle incident. Autrement dit, la normale au plan du composant sépare l'angle d'observation en deux secteurs angulaires de même mesure.

Les facettes étant à symétrie de révolution, quel que soit l'azimut, la réponse optique d'une facette de largeur A et de profondeur h est obtenue en calculant la transformée de Fourier TF du déphasage $\Delta\phi(y)$ subi par un rayon lumineux incident en une position donnée $y$ de la facette avec un angle $\theta_i$. Le déphasage $\Delta\phi(y)$ s'exprime par :

[Math 1]

$$\Delta\phi(y) = \exp\left(\frac{4\pi n_1 j}{\lambda} h \cdot \frac{y}{\Lambda}\right) ; y \in [0, \Lambda]$$

Où $\lambda$ est une longueur de travail centrale de la source d'illumination, par exemple 550 nm dans le visible, $n_1$ est l'indice de la première couche en matériau diélectrique (213, FIG. 2A et FIG. 2B), h est la hauteur des facettes. La réponse optique de la facette s'exprime ainsi par :

[Math 2]

$$TF(\nu) = \int_0^\Lambda \Delta\phi \, e^{-i2\pi\nu y} dy$$

Où $\nu$ est la fréquence spatiale donnée par :

[Math 3]

$$\nu = \frac{2\pi n_1}{\lambda} \sin(\theta_i).$$

Grâce à ce formalisme, nous pouvons prédire la distribution d'énergie lumineuse pour chaque facette en fonction de $\theta_0 + \theta_i$. autrement dit, pour un angle $\theta_i$ donné, il sera possible de prédire quelles facettes renvoient la lumière dans une direction d'observation définie par un angle d'observation $\theta_0$ donné.

En lumière blanche par exemple, la réponse optique des facettes de pente $\alpha_i$ correspond à un lobe diffractif obtenu en considérant l'enveloppe de l'amplitude des ordres diffractés pour des longueurs d'onde allant de 400 nm à 800 nm. Le lobe diffractif d'une facette d'angle de pente $\alpha_i$ est centré sur la position angulaire $\theta_0 = -\theta_i + 2. \alpha_i$.

Des exemples de lobes diffractifs 501, 502, 503, 504, 505, 505, 506, 507, 508 sont présentés sur la FIG. 5A. Ils correspondent respectivement à l'énergie lumineuse renvoyée par des facettes de largeurs [8.4$\mu$m, 11.2$\mu$m, 14.7$\mu$m, 24.5$\mu$m] pour une hauteur de 1$\mu$m.

On observe que les facettes faiblement inclinées renvoient l'énergie lumineuse dans une direction proche de la réflexion spéculaire (lobes 507, 508). A l'inverse, les facettes plus inclinées renvoient l'énergie lumineuse dans une direction qui s'éloigne de la réflexion spéculaire (lobes 501, 502). Il apparaît également qu'avec une pluralité de facettes présentant des angles différents dans un même sous-ensemble de facettes, la lumière est renvoyée dans une grande partie de l'espace correspondant à l'ensemble des lobes, ce qui contribue à générer un lobe de diffusion très large au sein duquel un objet graphique pourra être produit en altérant localement la surface de facettes au sein des sous-ensembles de facettes.

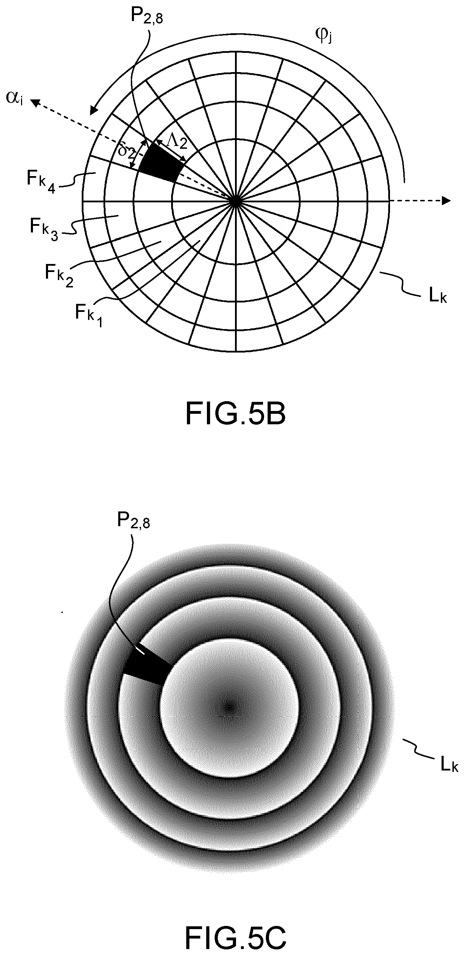

La FIG. 5B et la FIG. 5C illustrent de façon schématique en vue de dessus un sous-ensemble $L_k$ de facettes concentriques de type lentille de Fresnel (FIG. 5C). La FIG. 5B schématise cette même lentille mais partitionnée sous forme de régions ponctuelles ou pixels.

Comme cela est apparent sur figures, le sous-ensemble $L_k$ comprend dans cet exemple 4 facettes, indiquées $F_{k1}$, $F_{k2}$, $F_{k3}$, $F_{k4}$ sur la FIG. 5B et le plan est partitionné en 20 secteurs angulaires, ce qui génère 20 valeurs moyennes $\varphi_j$ de l'azimut $\varphi$.

On peut ainsi définir une région ponctuelle $P_{ij}$ par ses coordonnées polaires. La coordonnée radiale i correspond à la facette dans laquelle se trouve la région ponctuelle et la coordonnée angulaire *j* correspond à une valeur moyenne de l'azimut $\varphi_j$. Ainsi dans cet exemple, la région ponctuelle $P_{2,8}$ est la région située sur la facette $F_{k2}$, et à un azimut moyen $\varphi_8 =$ (360/20)x8 - ((360/20)/2= 135°.

Une telle région ponctuelle présente deux dimensions, à savoir une largeur $\Lambda_i$ égale à la largeur de la facette $F_{ki}$ sur laquelle elle est se trouve (largeur de la couronne résultant de la projection de la facette dans un plan parallèle au plan du composant) et une longueur d'arc $\delta_i$ qui dépend d'une résolution prédéterminée en azimut et du rayon, et donc de la facette $F_{ki}$ sur laquelle la région ponctuelle se trouve.

En pratique, la résolution en azimut *Res(azimut)* varie entre par exemple 180° pour une partition du plan en 2 (alternance entre 2 objets graphiques par rotation azimutale) et une résolution de 1° pour une partition du plan en 360 (un objet graphique par degré de rotation azimutale).

La longueur d'arc $\delta_i$ dépend du rayon et donc de la facette $F_{ki}$ considérée.

Par exemple, pour une résolution de 18° (partition du plan en 20), pour la première facette $F_{k1}$,

$$\delta_1 = (2*\pi/360°) *18°*25\mu m=7.8 \ \mu m.$$

Pour la quatrième facette $F_{k4}$, $\delta_4 = (2*\pi/360°) *70\mu m*18°=22 \ \mu m$.

De manière générale, l'aire $A(F_{ki})$ d'une facette $F_{ki}$ peut s'exprimer par :

[Math 4]

$$A(F_{ki}) = \pi((\Sigma \Lambda_i)^2 - (\Sigma \Lambda_{i-1})^2$$

Pour la première facette on calcule l'aire d'un cercle donc $(\Sigma \Lambda_{1-1})^2$ vaut 0
L'aire d'un pixel vaut alors :

[Math 5]

$$A(P_{ij}) = A(F_{ki}) * \frac{Res(azimut)}{360}$$

En pratique, avec une plus grande résolution radiale et azimutale, on observera une plus grande continuité dans le mouvement lors de mouvement respectivement en tilt ou en azimut. La résolution d'un objet graphique est quant à elle donnée par la distance entre des pixels de deux sous-ensembles de facettes juxtaposés. Cette distance dépend du diamètre d'un sous-ensemble de facettes et de la distance entre les deux sous-ensembles de facettes que l'on cherche à rendre minimale.

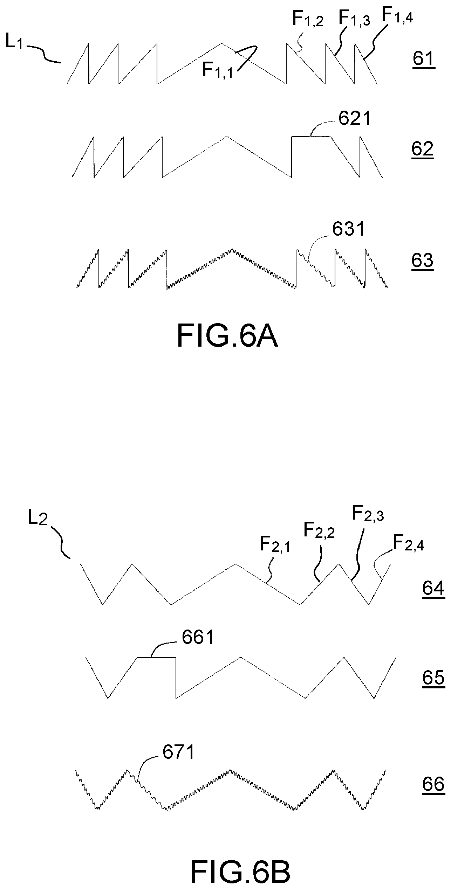

Les FIG 6A, FIG. 6B, FIG. 6C illustrent par des exemples des moyens pour obtenir une altération locale de la surface dans des sous-ensembles de facettes afin d'obtenir l'effet technique recherché.

La FIG. 6A représente ainsi un premier exemple d'un sous-ensemble de facettes $L_1$, formé de 4 facettes concentriques $F_{1,1}$, $F_{1,2}$, $F_{1,3}$, $F_{1,4}$, le sous-ensemble de facettes formant une structure de type « lentille de Fresnel ».

Le schéma 61 représente le sous-ensemble de facettes dans lequel aucun pixel ne présente de surface altérée.

Sur le schéma 62, la facette $F_{1,2}$ est altérée localement au moyen d'une annulation de la pente de telle sorte à former un pixel 621.

Le schéma 63 représente un cas dans lequel le premier motif constitué des facettes est modulé par un deuxième motif formant un réseau périodique de période prédéterminée pour produire, après dépôt de la couche réfléchissante, un effet résonant. Dans cet exemple, la facette $F_{1,2}$ est altérée localement au moyen d'une modification d'un ou plusieurs paramètres du réseau de diffraction sub longueur d'onde pour générer un pixel 631. Une altération locale de la surface peut également être formée par une absence locale du réseau de diffraction.

Le réseau est par exemple un réseau de diffraction sub longueur d'onde configuré pour produire un filtre soustractif en longueur d'onde à une ou deux dimensions, de type *« filtre résonant soustractif diélectrique »* ou un réseau de diffraction sub longueur d'onde configuré pour produire un filtre résonant coupe-bande en réflexion de type filtre plasmonique *« R'plasmon »*.

Le paramètre du réseau que l'on modifie localement est par exemple la période, l'azimut (ou orientation du vecteur réseau), la profondeur du réseau ou le profil, ou une combinaison de ces paramètres.

Dans d'autres exemples de réalisation, le premier motif constitué des facettes peut être modulé par un deuxième motif formant un réseau périodique de période prédéterminée pour produire, après dépôt de la couche réfléchissante, un effet résonant et donc un effet coloré, mais l'altération locale de la surface d'une facette peut résulter d'une pente locale nulle.

La FIG. 6B représente un deuxième exemple d'un sous-ensemble de facettes $L_2$, comprenant 4 facettes $F_{2,1}$, $F_{2,2}$, $F_{2,3}$, $F_{2,4}$, le sous-ensemble de facettes formant une structure de type axicon.

Le schéma 64 représente le sous-ensemble de facettes dans lequel aucun pixel ne présente de surface altérée.

Sur le schéma 65, la facette $F_{2,2}$ est altérée localement au moyen d'une annulation de la pente de telle sorte à former un pixel 661.

Le schéma 66 représente un cas dans lequel le premier motif constitué des facettes est modulé par un deuxième motif formant un réseau périodique de période prédéterminée pour produire, après dépôt de la couche réfléchissante, un effet résonant, par exemple un réseau tel que décrit précédemment.

Dans cet exemple, comme dans l'exemple précédent, la facette $F_{2,2}$ peut être altérée localement au moyen d'une modification d'un paramètre du réseau de diffraction sub longueur d'onde pour générer un pixel 671.

La FIG. 6C représente un troisième exemple d'un sous-ensemble $L_3$ formé de 4 facettes $F_{3,1}$, $F_{3,2}$, $F_{3,3}$, $F_{3,4}$, le sous-ensemble de facettes formant une structure de type axicon. Contrairement à l'exemple de la FIG. 6B, la largeur de chaque facette est constante tandis que la hauteur est variable. Pour un diamètre donné d'un sous-ensemble de facettes, cela permet d'avoir un plus grand nombre de facettes et donc une meilleure résolution de l'objet graphique.

Le schéma 67 représente le sous-ensemble de facettes dans lequel aucun pixel ne présente de surface altérée.

Sur le schéma 68, la facette $F_{2,2}$ est altérée localement au moyen d'une annulation de la pente de telle sorte à former un pixel 681.

Le schéma 69 représente un cas dans lequel le premier motif constitué des facettes est modulé par un deuxième motif formant un réseau périodique de période prédéterminée pour produire, après dépôt de la couche réfléchissante, un effet résonant, par exemple un réseau tel que décrit précédemment.

Dans cet exemple, comme dans l'exemple précédent, la facette $F_{3,2}$ peut être altérée localement au moyen d'une modification d'un paramètre d'un réseau de diffraction sub longueur d'onde pour générer un pixel 691.

A noter qu'en pratique, le premier motif de la première structure peut être constitué d'une pluralité de sous-ensembles de facettes $F_{k,i}$ qui présentent tous un agencement similaire de facettes, par exemple mais non exclusivement, pour former des sous-ensembles de facettes de type lentilles de Fresnel ou axicons tels qu'illustrés sur les Fig.6A, Fig. 6B ou Fig. 6C. Cependant, il est possible également d'avoir un premier motif constitué d'une pluralité de sous-ensembles de facettes, les sous-ensembles de facettes ne présentant pas tous un même agencement de facettes. Par exemple, il peut y avoir des sous-ensembles de facettes à la fois de type lentilles de Fresnel ou axicons tels qu'illustrés sur les Fig.6A, Fig. 6B ou Fig. 6C.

En effet, l'effet technique du composant optique de sécurité selon la présente description pourra rester sensiblement le même, tant que les pentes des facettes qui portent une altération locale de la surface dans les sous-ensembles des facettes sont dans la même gamme de pentes. Il est par exemple possible de prévoir des sous-ensembles de facettes comprenant des facettes avec des pentes supérieures aux pentes des facettes qui portent une altération locale de la surface pour créer des effets visuels supplémentaires qui ne sont apparents que pour tes tilts beaucoup plus importants et qui peuvent ainsi former une authentification supplémentaire. La FIG. 7 illustre de façon schématique des opérations mathématiques permettant le calcul de la première structure diffractive, dans un exemple de réalisation.

Plus précisément, on cherche à déterminer une matrice à deux dimensions $F_{out}$ qui code la hauteur en tout point de la première structure diffractive, par exemple en niveaux de gris. Le fichier de calcul ainsi déterminé pourra être directement utilisé pour la fabrication du master optique, comme cela sera discuté plus en détails par la suite.

La FIG. 7 représente plus précisément les opérations mathématiques permettant de déterminer la contribution $F_{out}(\alpha_i, \varphi_j)$ à la matrice à deux dimensions $F_{out}$, d'un groupe de sous-ensemble de facettes permettant de générer un objet graphique dans un angle de vue défini par $(\alpha_i, \varphi_j)$. La matrice S (schéma 71) représente selon un exemple tous les sous-ensembles de facettes. Par exemple sur une surface de 5x5 mm$^2$ et avec un sous-ensemble de facette de diamètre 150 $\mu$m, environ 1300 sous-ensembles de facettes identiques seront contenus dans le premier motif de la structure diffractive car la surface d'un hexagone contenant un cercle de diamètre inscrit de 150$\mu$m fait environ 0,0195 mm$^2$.

La matrice $M(\alpha_i, \varphi_j)$ (schéma 72) représente le masque binaire permettant d'isoler un angle de vue défini par $(\alpha_i, \varphi_j)$ de chaque cellule ; pour chaque couple $(\alpha_i, \varphi_j)$, la matrice M est différente.

La matrice I($\alpha_i$, $\varphi_j$) (schéma 73) représente l'image binaire à afficher à son angle associé, pour chaque couple ($\alpha_i$, $\varphi_j$).

Le schéma 74 illustre le résultat $F_{out}$($\alpha_i$, $\varphi_j$) d'une multiplication terme à terme des matrices S, M($\alpha_i$, $\varphi_j$) et I($\alpha_i$, $\varphi_j$).

La matrice à deux dimensions $F_{out}$ est alors donnée par l'équation :

[Math 6]

$$F_{Out} = \sum_{\alpha_{i\_min}}^{\alpha_{i\_max}} \sum_{\varphi j=0}^{\varphi j=2\pi} S.M(\alpha_i, \varphi_j).I(\alpha_i, \varphi_j)$$

Elle résulte d'une somme sur l'ensemble des matrices $F_{out}$($\alpha_i$, $\varphi_j$).

A titre d'illustration, la FG. 8A illustre une matrice $F_{out}$ obtenu selon la méthode de calcul décrite ci-dessus et la FIG. 8B un détail de la FIG. 8A, selon un exemple. La hauteur est codée en niveaux de gris, un pixel noir représentant une pente locale nulle.

Dans cet exemple, le motif comprend 270 sous-ensembles de facettes $L_k$ et 200 groupes de sous-ensembles de facettes.

La FIG. 9A montre de façon schématique l'effet dynamique en azimut obtenu au moyen d'une structure du type de celle illustrée sur la FIG. 8A.

Un observateur peut voir l'objet graphique « π » se déplacer lors d'un mouvement azimutal. La FIG. 9B montre de façon schématique l'effet dynamique en tilt obtenu au moyen d'une structure du type de celle illustrée sur la FIG. 8A.

Un observateur peut voir l'objet graphique « π » se déplacer lors d'un mouvement en tilt.

A noter qu'il est possible grâce au composant selon la présente description de produire un mouvement orthoparallaxe d'un objet graphique, c'est-à-dire que l'objet graphique se déplace parallèlement à l'axe de tilt.

En pratique, un observateur pourra observer un effet de flottaison de l'objet graphique avec une profondeur liée à l'ampleur du déplacement. Lorsque le déplacement suit le mouvement de l'observateur, l'image semble flotter au-dessus du document et à l'inverse elle flotte en dessous lorsque le mouvement est contrarié.

On décrit maintenant des exemples de procédé de fabrication de composants optiques de sécurité selon la présente description.

Une première étape comprend la conception de ladite au moins une première structure diffractive selon les modalités décrites ci-dessus, et d'éventuelles autres structures.

Vient ensuite une étape d'enregistrement d'un exemplaire original, aussi appelé master optique. Le master optique est par exemple un support optique sur lequel la ou les structure(s) sont formées.

Le master optique peut être formé par des méthodes de lithographie électronique ou optique connues de l'état de l'art, par exemple à partir d'un fichier $F_{out}$ tel que décrit précédemment. Par exemple, selon un premier mode de réalisation, le master optique est réalisé par gravure d'une résine sensible au rayonnement électromagnétique en utilisant un faisceau d'électrons. Dans cet exemple de réalisation, la structure présentant le premier motif modulé par le second motif peut être gravée en une seule étape.

Selon un autre mode de réalisation, une technique de lithographie optique (ou photolithographie) peut être utilisée. Le master optique est dans cet exemple une plaque de résine photosensible et l'étape d'origination est effectuée par une ou plusieurs insolations de la plaque par projections de masques, de type masque de phase et/ou de type masque d'amplitude, suivies d'un développement dans une solution chimique appropriée. Par exemple, une première insolation est réalisée par projection de masques d'amplitude dont les coefficients de transmission sont adaptés pour que soit formé, après développement, un relief correspondant au premier motif, dans les régions dans lesquelles le premier motif est prévu. Ensuite, une deuxième insolation globale est réalisée, selon des méthodes de photolithographie interférentielle connues de l'homme de l'art, un réseau de diffraction correspondant au second motif peut être enregistré au moins dans des premières régions dans lesquelles le deuxième motif est prévu. Des étapes similaires peuvent être prévues pour générer d'autres reliefs, comme par exemple un deuxième réseau de diffraction dans d'autres régions. L'ordre de formation des motifs est quelconque et peut être modifié. Par la suite, l'étape de développement est menée. De cette manière, un master optique comprenant une structure qui résulte du premier motif modulé par le deuxième motif est obtenu après développement.

Il peut être alors procédé à l'étape de copie métallique du master optique par exemple par galvanoplastie, comme évoqué précédemment, afin d'obtenir la matrice de réplication ou « master » métallique. Selon une variante, une étape de duplication matricielle du master métallique peut être effectuée pour obtenir un outil de production de grande taille adapté pour répliquer la structure en quantité industrielle.

La fabrication du composant optique de sécurité comprend alors une étape de réplication. Par exemple la réplication peut être réalisée par estampage (par pressage à chaud du matériau diélectrique en anglais « hot embossing ») de la première couche 213 (FIGS. 2A, 2B) en matériau diélectrique d'indice de réfraction n$_1$, par exemple une couche de bas indice, typiquement un vernis d'estampage de quelques microns d'épaisseur. La couche 213 est avantageusement portée par le film support 211, par exemple un film de 12 $\mu$m à 100 $\mu$m en matériau polymère, par exemple en PET (polyéthylène téréphtalate). La réplication peut également être faite par moulage de la couche de vernis d'estampage avant séchage puis réticulation UV (« UV casting »). La réplication par réticulation UV permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication.

Vient ensuite le dépôt sur la couche ainsi embossée de l'ensemble des autres couches, par exemple la couche réfléchissante 214, la couche en matériau diélectrique 215 (optionnelle), la couche de sécurité 216 (optionnelle) qui peut être déposée uniformément ou sélectivement pour figurer un nouveau motif et la couche de type colle ou vernis (217, 218) par un procédé d'enduction.

Des étapes optionnelles et connues de l'homme de l'art sont possibles, comme une démétallisation partielle de la couche réflective 214. Il est également possible d'introduire une couche opaque continue ou discontinue pour renforcer le contraste.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Références**

Réf. 1 : WO2015154943
Réf. 2 : WO2018224512
Réf. 3 : US2010/0182221
Réf. 4 : US 20140367957
Réf. 5 : EP 3598204
Réf. 6 : WO2001003945
Réf. 7 : US4856857
Réf. 8 : FR2509873
Réf. 9 : EP2771724
Réf. 10 : EP3099513

**Revendications**

1.  Composant optique de sécurité (201, 202) configuré pour une authentification en réflexion, selon au moins une première face d'observation (200), le composant comprenant :

    - une première couche (213) en matériau diélectrique, transparente dans le visible;
    - au moins une première structure diffractive (S) gravée sur ladite première couche ; et
    - une deuxième couche (214), recouvrant au moins en partie ladite première structure diffractive, et présentant une bande spectrale de réflexion dans le visible ; et dans lequel :

    - ladite première structure diffractive comprend au moins un premier motif ($M_1$) constitué d'un ensemble de facettes ($F_{kl}$) agencées pour former une pluralité de sous-ensembles de facettes, chaque sous-ensemble de facettes comprenant une ou plusieurs facettes à symétrie de révolution agencées de façon concentrique, la ou lesdites facettes de chaque sous-ensemble de facettes présentant chacune une pente avec une valeur angulaire comprise en valeur absolue entre une valeur angulaire minimale ($\alpha_{min}$) non nulle et une valeur angulaire maximale ($\alpha_{max}$) strictement inférieure à 90°, la ou lesdites facettes de chaque sous-ensemble de facettes comprenant chacune une hauteur maximale ($h_m$) donnée, une dimension latérale maximale de chaque sous ensemble de facettes étant inférieure à environ 300 $\mu$m;
    - dans chaque groupe d'une pluralité de groupes de sous-ensembles de facettes, lesdits sous-ensembles de facettes présentent chacun, en une région ponctuelle ($P_{ij}$) définie par un secteur angulaire de coordonnées polaires comprenant une coordonnée angulaire et une coordonnée radiale, identiques pour tous les sous-ensembles de facettes du groupe, une altération locale de la surface, de telle sorte à produire un objet graphique reconnaissable pour un angle de tilt et un angle d'azimut donnés; le composant étant **caractérisé en ce que** :

- au moins la coordonnée angulaire varie d'un groupe à l'autre, de telle sorte à produire, lorsque le composant est éclairé selon un axe d'éclairage donné, un effet visuel dynamique observable en réflexion par changement d'azimut, ledit effet visuel dynamique comprenant un déplacement et/ou une déformation dudit objet graphique.

2. Composant optique de sécurité selon la revendication 1, dans lequel ladite altération locale de la surface comprend une pente locale sensiblement nulle de la facette.

3. Composant optique de sécurité selon la revendication 1, dans lequel ladite altération locale de la surface comprend une modulation locale du premier motif par un deuxième motif ($M_2$) formant un réseau périodique, de période (d) prédéterminée comprise entre 150 nm et 500 nm, ledit réseau étant déterminé pour produire, après dépôt de la deuxième couche, un effet résonant.

4. Composant optique de sécurité selon l'une quelconque des revendications 1 ou 2, dans lequel dans au moins une première région, ledit premier motif est modulé par un deuxième motif (M2) formant un réseau périodique, de période (d) prédéterminée comprise entre 150 nm et 500 nm, ledit réseau étant déterminé pour produire, après dépôt de la deuxième couche, un effet résonant.

5. Composant optique de sécurité selon la revendication 4, dans lequel ladite altération locale de la surface comprend une modification locale d'une propriété dudit réseau périodique.

6. Composant optique de sécurité selon la revendication 1, dans lequel lesdites coordonnées polaires varient d'un groupe à l'autre, de telle sorte à produire en outre, lorsque le composant est éclairé selon un axe d'éclairage donné, un effet visuel dynamique observable en réflexion par changement de tilt.

7. Composant optique de sécurité selon l'une quelconque des revendications précédentes, dans lequel la deuxième couche comprend un matériau métallique.

8. Composant optique de sécurité selon l'une quelconque des revendications 1 à 6, dans lequel le matériau diélectrique de la première couche présente un premier indice de réfraction ($n_1$) et la deuxième couche comprend un matériau diélectrique présentant un deuxième indice de réfraction ($n_2$) tel que la différence entre le deuxième indice de réfaction ($n_2$) et le premier indice de réfraction ($n_1$) est supérieure ou égale à environ 0,3.

9. Composant optique de sécurité selon l'une quelconque des revendications précédentes, dans lequel la valeur angulaire de la pente de chaque facette de l'ensemble de facettes est comprise, en valeur absolue, entre environ 1° et environ 45°.

10. Composant optique de sécurité selon l'une quelconque des revendications précédentes, dans lequel les facettes de l'ensemble de facettes ont une hauteur sensiblement identique.

11. Composant optique de sécurité selon l'une quelconque des revendications précédentes, dans lequel chaque sous-ensemble de facettes comprend au moins 5 facettes à symétrie de révolution agencées de façon concentrique.

12. Objet sécurisé, par exemple document de valeur sécurisé, comprenant un substrat et un composant optique de sécurité selon l'une quelconque des revendications précédentes, déposé sur ledit substrat.

13. Procédé de fabrication d'un composant optique de sécurité destiné à être observé en réflexion selon une face d'observation, le procédé comprenant :

- le dépôt sur un film support d'une première couche en matériau diélectrique, transparente dans le visible;
- la formation sur ladite première couche d'au moins une première structure diffractive (S),
- le dépôt d'une deuxième couche, recouvrant au moins en partie ladite première structure diffractive, et présentant une bande spectrale de réflexion dans le visible, dans lequel:

- - ladite première structure diffractive comprend au moins un premier motif ($M_1$) constitué d'un ensemble de facettes ($F_{kl}$) agencées pour former une pluralité de sous-ensembles de facettes, chaque sous-ensemble de facettes comprenant une ou plusieurs facettes à symétrie de révolution agencées de façon concentrique, la ou lesdites facettes de chaque sous-ensemble de facettes présentant chacune une pente avec une valeur angulaire comprise en valeur absolue entre une valeur angulaire minimale ($\alpha_{min}$) non nulle et une valeur angulaire maximale ($\alpha_{max}$) strictement inférieure à 90°, la ou lesdites facettes de chaque sous-ensemble de facettes comprenant chacune une hauteur maximale ($h_m$) donnée, une dimension latérale maximale de chaque sous ensemble de facettes étant inférieure à environ 300 $\mu$m;

- dans chaque groupe d'une pluralité de groupes de sous-ensembles de facettes, lesdits sous-ensembles de facettes présentent chacun, en une région ponctuelle ($P_{ij}$) définie par un secteur angulaire de coordonnées polaires comprenant une coordonnée angulaire et une coordonnée radiale, identiques pour tous les sous-ensembles de facettes du groupe, une altération locale de la surface, de telle sorte à produire un objet graphique reconnaissable pour un angle de tilt et un angle d'azimut donnés;

- au moins la coordonnée angulaire varie d'un groupe à l'autre, de telle sorte à produire, lorsque le composant est éclairé selon un axe d'éclairage donné, un effet visuel dynamique observable en réflexion par changement d'azimut, ledit effet visuel dynamique comprenant un déplacement et/ou une déformation dudit objet graphique.

14. Procédé d'authentification à l'œil nu d'un objet sécurisé selon la revendication 12 comprenant :

- l'observation dudit composant optique de sécurité selon un axe d'observation formant un angle d'observation donné avec l'axe d'éclairage ;
- un mouvement en tilt et/ou en azimut dudit objet sécurisé résultant en un effet visuel dynamique comprenant un déplacement et/ou une déformation dudit objet graphique, ledit objet graphique étant reconnaissables à l'œil nu.

15. Procédé d'authentification d'un objet sécurisé selon la revendication 12 au moyen d'un dispositif optique d'imagerie comprenant un axe optique d'imagerie, ledit procédé d'authentification comprenant :

- la formation d'une image dudit composant optique de sécurité, au moyen du dispositif optique d'imagerie, ledit axe optique d'imagerie formant un angle d'observation donné avec l'axe d'éclairage ;
- un mouvement en tilt et/ou en azimut dudit objet sécurisé ou un mouvement en tilt et/ou en azimut dudit axe optique d'imagerie, résultant en un effet visuel dynamique comprenant un déplacement et/ou une déformation dudit objet graphique, ledit objet graphique étant reconnaissable par ledit dispositif optique d'imagerie.

16. Procédé d'authentification selon la revendication 15, dans lequel l'axe d'éclairage et l'axe optique d'imagerie sont confondus.

**Patentansprüche**

1. Optische Sicherheitskomponente (201, 202), die zu einer Authentifizierung im Auflicht entlang mindestens einer ersten Betrachtungsseite (200) ausgestaltet ist, die Komponente umfassend:

- eine erste Schicht (213) aus dielektrischem Material, die im sichtbaren Bereich transparent ist;
- mindestens eine erste diffraktive Struktur (S), die in die erste Schicht geätzt ist; und
- eine zweite Schicht (214), welche die erste diffraktive Struktur mindestens zum Teil bedeckt und ein Reflexionsspektralband im sichtbaren Bereich aufweist; und wobei:

- die erste diffraktive Struktur mindestens ein erstes Muster ($M_1$) umfasst, das aus einer Anordnung von Facetten ($F_{kl}$) besteht, die angeordnet sind, um eine Mehrzahl von Facettenunteranordnungen zu bilden, wobei jede Facettenunteranordnung eine oder mehrere rotationssymmetrische Facetten umfasst, die konzentrisch angeordnet sind, wobei die Facette oder Facetten jeder Facettenunteranordnung jeweils eine Neigung mit einem Winkelwert aufweist bzw. aufweisen, der als Absolutwert zwischen einem minimalen Winkelwert ($\alpha_{min}$) ungleich null und einem maximalen Winkelwert ($\alpha_{max}$) strikt kleiner als 90° liegt, wobei die Facette oder Facetten jeder Facettenunteranordnung jeweils eine gegebene maximale Höhe ($h_m$) umfasst bzw. umfassen, wobei ein maximales seitliches Maß jeder Facettenunteranordnung kleiner als etwa 300 $\mu$m ist;

- in jeder Gruppe einer Mehrzahl von Gruppen von Facettenunteranordnungen die Facettenunteranordnungen jeweils in einer punktuellen Region ($P_{ij}$), die durch einen Winkelsektor mit Polarkoordinaten, die eine Winkelkoordinate und eine Radialkoordinate umfassen, die bei allen Facettenunteranordnungen der Gruppe identisch sind, definiert wird, eine lokale Strukturveränderung der Oberfläche aufweisen, so dass bei einem gegebenen Kippwinkel und bei einem gegebenen Azimutwinkel ein erkennbares grafisches Objekt erzeugt wird, wobei die Komponente **dadurch gekennzeichnet ist, dass**:

- mindestens die Winkelkoordinate von einer Gruppe zur anderen variiert, so dass, wenn die Komponente entlang einer gegebenen Beleuchtungsachse beleuchtet wird, durch Azimutänderung ein im Auflicht betrachtbarer dynamischer visueller Effekt erzeugt wird, wobei der dynamische visuelle Effekt eine Verlagerung und/oder eine Verformung des grafischen Objekts umfasst.

2. Optische Sicherheitskomponente nach Anspruch 1, wobei die lokale Strukturveränderung der Oberfläche eine lokale Neigung der Facette von im Wesentlichen null umfasst.

3. Optische Sicherheitskomponente nach Anspruch 1, wobei die lokale Strukturveränderung der Oberfläche eine lokale Modulation des ersten Musters durch ein zweites Muster ($M_2$) umfasst, das ein periodisches Gitter mit einer vorbestimmten Periode (d) zwischen 150 nm und 500 nm bildet, wobei das Gitter so bestimmt wird, dass nach dem Abscheiden der zweiten Schicht ein resonanter Effekt erzeugt wird.

4. Optische Sicherheitskomponente nach einem der Ansprüche 1 oder 2, wobei in mindestens einer ersten Region das erste Muster durch ein zweites Muster (M2) moduliert wird, das ein periodisches Gitter mit einer vorbestimmten Periode (d) zwischen 150 nm und 500 nm bildet, wobei das Gitter so bestimmt wird, dass nach dem Abscheiden der zweiten Schicht ein resonanter Effekt erzeugt wird.

5. Optische Sicherheitskomponente nach Anspruch 4, wobei die lokale Strukturveränderung der Oberfläche eine lokale Modifikation einer Eigenschaft des periodischen Gitters umfasst.

6. Optische Sicherheitskomponente nach Anspruch 1, wobei die Polarkoordinaten von einer Gruppe zur anderen variieren, so dass ferner, wenn die Komponente entlang einer gegebenen Beleuchtungsachse beleuchtet wird, durch Kippänderung ein im Auflicht betrachtbarer dynamischer visueller Effekt erzeugt wird.

7. Optische Sicherheitskomponente nach einem der vorhergehenden Ansprüche, wobei die zweite Schicht ein metallisches Material umfasst.

8. Optische Sicherheitskomponente nach einem der Ansprüche 1 bis 6, wobei das dielektrische Material der ersten Schicht einen ersten Brechungsindex ($n_1$) aufweist und die zweite Schicht ein dielektrisches Material umfasst, das einen zweiten Brechungsindex ($n_2$) aufweist, derart, dass die Differenz zwischen dem zweiten Brechungsindex ($n_2$) und dem ersten Brechungsindex ($n_1$) größer oder gleich etwa 0,3 ist.

9. Optische Sicherheitskomponente nach einem der vorhergehenden Ansprüche, wobei der Winkelwert der Neigung jeder Facette der Anordnung von Facetten als Absolutwert zwischen etwa 1° und etwa 45° liegt.

10. Optische Sicherheitskomponente nach einem der vorhergehenden Ansprüche, wobei die Facetten der Anordnung von Facetten eine im Wesentlichen identische Höhe haben.

11. Optische Sicherheitskomponente nach einem der vorhergehenden Ansprüche, wobei jede Facettenunteranordnung mindestens 5 rotationssymmetrische Facetten umfasst, die konzentrisch angeordnet sind.

12. Gesichertes Objekt, zum Beispiel gesichertes Wertdokument, umfassend ein Substrat und eine optische Sicherheitskomponente nach einem der vorhergehenden Ansprüche, die auf dem Substrat abgeschieden ist.

13. Verfahren zur Herstellung einer optischen Sicherheitskomponente, die dazu bestimmt ist, im Auflicht entlang einer Betrachtungsseite betrachtet zu werden, das Verfahren umfassend:

- das Abscheiden einer ersten Schicht aus dielektrischem Material, die im sichtbaren Bereich transparent ist, auf einem Trägerfilm;
- das Bilden mindestens einer ersten diffraktiven Struktur (S) auf der ersten Schicht,
- das Abscheiden einer zweiten Schicht, welche die erste diffraktive Struktur mindestens zum Teil bedeckt und ein Reflexionsspektralband im sichtbaren Bereich aufweist, und wobei:

- die erste diffraktive Struktur mindestens ein erstes Muster ($M_1$) umfasst, das aus einer Anordnung von Facetten ($F_{kl}$) besteht, die angeordnet sind, um eine Mehrzahl von Facettenunteranordnungen zu bilden, wobei jede Facettenunteranordnung eine oder mehrere rotationssymmetrische Facetten umfasst, die konzentrisch angeordnet sind, wobei die Facette oder Facetten jeder Facettenunteranordnung jeweils eine Neigung mit einem Winkelwert aufweist bzw. aufweisen, der als Absolutwert zwischen einem minimalen Winkelwert ($\alpha_{min}$) ungleich null und einem maximalen Winkelwert ($\alpha_{max}$) strikt kleiner als 90° liegt, wobei die Facette oder Facetten jeder Facettenunteranordnung jeweils eine gegebene maximale Höhe ($h_m$) umfasst bzw. umfassen, wobei ein maximales seitliches Maß jeder Facettenunteranordnung kleiner als etwa 300 $\mu$m ist;

- in jeder Gruppe einer Mehrzahl von Gruppen von Facettenunteranordnungen die Facettenunteranordnungen jeweils in einer punktuellen Region ($P_{ij}$), die durch einen Winkelsektor mit Polarkoordinaten, die eine Winkelkoordinate und eine Radialkoordinate umfassen, die bei allen Facettenunteranordnungen der Gruppe identisch sind, definiert wird, eine lokale Strukturveränderung der Oberfläche aufweisen, so dass bei einem gegebenen Kippwinkel und bei einem gegebenen Azimutwinkel ein erkennbares grafisches Objekt erzeugt wird,

- mindestens die Winkelkoordinate von einer Gruppe zur anderen variiert, so dass, wenn die Komponente entlang einer gegebenen Beleuchtungsachse beleuchtet wird, durch Azimutänderung ein im Auflicht betrachtbarer dynamischer visueller Effekt erzeugt wird, wobei der dynamische visuelle Effekt eine Verlagerung und/oder eine Verformung des grafischen Objekts umfasst.

**14.** Verfahren zur Authentifizierung eines gesicherten Objekts mit bloßem Auge nach Anspruch 12, umfassend:

- das Betrachten der optischen Sicherheitskomponente entlang einer Betrachtungsachse, die einen gegebenen Betrachtungswinkel mit der Beleuchtungsachse bildet;
- eine Kipp- und/oder Azimutbewegung des gesicherten Objekts, die zu einem dynamischen visuellen Effekt führt, der eine Verlagerung und/oder eine Verformung des grafischen Objekts umfasst, wobei das grafische Objekt mit bloßem Auge erkennbar ist.

**15.** Verfahren zur Authentifizierung eines gesicherten Objekts nach Anspruch 12 mittels einer optischen Bildgebungsvorrichtung, die eine optische Bildgebungsachse umfasst, wobei das Verfahren zur Authentifizierung umfasst:

- das Bilden eines Bilds der optischen Sicherheitskomponente mittels der optischen Bildgebungsvorrichtung, wobei die optische Bildgebungsachse einen gegebenen Betrachtungswinkel mit der Beleuchtungsachse bildet;
- eine Kipp- und/oder Azimutbewegung des gesicherten Objekts oder eine Kipp- und/oder Azimutbewegung der optischen Bildgebungsachse, die zu einem dynamischen visuellen Effekt führt, der eine Verlagerung und/oder eine Verformung des grafischen Objekts umfasst, wobei das grafische Objekt durch die optische Bildgebungsvorrichtung erkennbar ist.

**16.** Verfahren zur Authentifizierung nach Anspruch 15, wobei die Beleuchtungsachse und die optische Bildgebungsachse zusammenfallen.

**Claims**

**1.** An optical security component (201, 202) configured for authentication in reflection, from at least a first viewing face, (200), the component comprising:

- a first layer (213) made of dielectric material, transparent in the visible;
- at least a first diffractive structure (S) etched on said first layer; and
- a second layer (214), covering said first diffractive structure at least partially, and having a spectral band of reflection in the visible; and wherein:

- said first diffractive structure comprises at least a first pattern ($M_1$) consisting of a set of facets ($F_{kl}$) arranged to form a plurality of subsets of facets, each subset of facets comprising one or more facets with symmetry of revolution arranged concentrically, said facet(s) of each subset of facets each having a slope with an angular value comprised, in absolute value, between a non-zero minimum angular value ($\alpha_{min}$) and a maximum angular value ($\alpha_{max}$) strictly less than 90°, said facet(s) of each subset of facets each having a given maximum height ($h_m$), a maximum lateral dimension of each subset of facets being smaller than approximately 300 $\mu$m;
- in each group of a plurality of groups of subsets of facets, said subsets of facets each present, in a point

region ($P_{ij}$) defined by an angular sector with polar coordinates comprising an angular coordinate and a radial coordinate which are identical for all subsets of facets of the group, a local alteration of the surface, such as to produce a recognizable graphical object for a given tilt angle and azimuth angle; the component being **characterized in that**:

- at least said angular coordinate varies from one group to another, in such a way as to produce, when the component is illuminated along a given lighting axis, a dynamic visual effect observable in reflection by a change of azimuth, said dynamic visual effect comprising a movement and/or a deformation of said graphical object.

2. The optical security component as claimed in claim 1, wherein said local alteration of the surface comprises a substantially zero local slope of the facet.

3. The optical security component as claimed in claim 1, wherein said local alteration of the surface comprises a local modulation of the first pattern by a second pattern ($M_2$) forming a periodic grating, of predetermined period (d) included between 150 nm and 500 nm, said grating being determined so as to produce, after deposition of the second layer, a resonant effect.

4. The optical security component as claimed in either of claims 1 and 2, wherein in at least a first region, said first pattern is modulated by a second pattern ($M_2$) forming a periodic grating, of predetermined period (d) included between 150 nm and 500 nm, said grating being determined so as to produce, after deposition of the second layer, a resonant effect.

5. The optical security component as claimed in claim 4, wherein said local alteration of the surface comprises a local modification of a property of said periodic grating.

6. The optical security component as claimed in claim 1, wherein said polar coordinates vary from one group to another, in such a way as to further produce, when the component is illuminated along a given lighting axis, a dynamic visual effect observable in reflection by a change of tilt.

7. The optical security component as claimed in any one of the preceding claims, wherein the second layer comprises a metal material.

8. The optical security component as claimed in any one of claims 1 to 6, wherein the dielectric material of the first layer has a first refractive index ($n_1$) and the second layer comprises a dielectric material having a second refractive index ($n_2$) such that the difference between the second refractive index ($n_2$) and the first refractive index ($n_1$) is greater than or equal to approximately 0.3.

9. The optical security component as claimed in any one of the preceding claims, wherein the angular value of the slope of each facet of the set of facets is comprised, in absolute value, between approximately 1° and approximately 45°.

10. The optical security component as claimed in any one of the preceding claims, wherein the facets of the set of facets have a substantially identical height.

11. The optical security component as claimed in any one of the preceding claims, wherein each subset of facets comprises at least 5 facets with symmetry of revolution arranged concentrically.

12. A secure object, for example a secure valuable document, comprising a substrate and an optical security component as claimed in any one of the preceding claims, deposited on said substrate.

13. A method for manufacturing an optical security component intended to be viewed in reflection from a viewing face, the method comprising:

- depositing, on a support film, a first layer made of dielectric material, transparent in the visible;
- forming, on said first layer, at least a first diffractive structure (S),
- depositing a second layer, covering said first diffractive structure at least partially, and having a spectral band of reflection in the visible, wherein:

- said first diffractive structure comprises at least a first pattern ($M_1$) consisting of a set of facets ($F_{kl}$) arranged

to form a plurality of subsets of facets, each subset of facets comprising one or more facets with symmetry of revolution arranged concentrically, said facet(s) of each subset of facets each having a slope with an angular value comprised, in absolute value, between a non-zero minimum angular value ($\alpha_{min}$) and a maximum angular value ($\alpha_{max}$) strictly less than 90°, said facet(s) of each subset of facets each having a given maximum height ($h_m$), a maximum lateral dimension of each subset of facets being smaller than approximately 300 $\mu$m;

- in each group of a plurality of groups of subsets of facets, said subsets of facets each present, in a point region ($P_{ij}$) defined by an angular sector with polar coordinates comprising an angular coordinate and a radial coordinate which are identical for all subsets of facets of the group, a local alteration of the surface, such as to produce a recognizable graphical object for a given tilt angle and azimuth angle;

- at least said angular coordinate varies from one group to another, in such a way as to produce, when the component is illuminated along a given lighting axis, a dynamic visual effect observable in reflection by a change of azimuth, said dynamic visual effect comprising a movement and/or a deformation of said graphical object.

14. A method for authenticating with the naked eye a secure object as claimed in claim 12, comprising:

- viewing said optical security component along a viewing axis forming a given viewing angle with the lighting axis;
- a tilting and/or azimuthal movement of said secure object resulting in a dynamic visual effect comprising a movement and/or deformation of said graphical object, said graphical object being recognizable to the naked eye.

15. A method for authenticating a secure object as claimed in claim 12 by means of an optical imaging device comprising an optical imaging axis, said authentication method comprising:

- forming an image of said optical security component, by means of the optical imaging device, said optical imaging axis forming a given viewing angle with the lighting axis;
- a tilting and/or azimuthal movement of said secure object resulting in a dynamic visual effect comprising a movement and/or deformation of said graphical object, said graphical object being recognizable to the naked eye.

16. The authentication method as claimed in claim 15, wherein the lighting axis and the optical imaging axis are coincident.

10

12

11

16

14  18

(ART ANTERIEUR)

# FIG.1A

$R_2$  $R_2$  $R_2$

20

$R_1$  $R_1$

27

28  26

(ART ANTERIEUR)

# FIG.1B

FIG.2A

FIG.2B

FIG.3A

FIG.3B

FIG.3C

EP 4 366 954 B1

FIG.4A

FIG.4B

FIG.5A

EP 4 366 954 B1

FIG.5B

FIG.5C

FIG.6A

FIG.6B

FIG.6C

FIG.7

$L_k$

$S$

FIG.8A

$L_k$

FIG.8B

X 40 images

FIG.9A

FIG.9B

**EP 4 366 954 B1**

**Documents brevets cités dans la description**

- WO 2015154943 A
- WO 2018224512 A
- US 20100182221 A
- US 20140367957 A
- EP 3598204 A
- WO 2001003945 A
- US 4856857 A
- FR 2509873 B1
- EP 2771724 A
- EP 3099513 A
- FR 2509873